(19) Europäisches Patentamt
European Patent Office
Office européen des brevets

(11) **EP 4 233 163 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **21816368.1**

(22) Anmeldetag: **18.11.2021**

(51) Internationale Patentklassifikation (IPC):
***H02K 41/03*** (2006.01)

(52) Gemeinsame Patentklassifikation (CPC):
**H02K 41/031;** H02K 2201/18

(86) Internationale Anmeldenummer:
**PCT/EP2021/082169**

(87) Internationale Veröffentlichungsnummer:
**WO 2022/106555 (27.05.2022 Gazette 2022/21)**

(54) **VERFAHREN ZUM STEUERN EINES PLANARANTRIEBSSYSTEMS**

METHOD FOR CONTROLLING A PLANAR DRIVE SYSTEM

PROCÉDÉ DE COMMANDE D'UN SYSTÈME D'ENTRAÎNEMENT PLAN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2020 DE 102020130795**

(43) Veröffentlichungstag der Anmeldung:
**30.08.2023 Patentblatt 2023/35**

(73) Patentinhaber: **Beckhoff Automation GmbH 33415 Verl (DE)**

(72) Erfinder:
• **STOCKEM, Irina**
**33334 Gütersloh (DE)**

• **BALZER, Viktor**
**32051 Herford (DE)**
• **MAGUIRE, Keir**
**Vancouver, British Columbia V6K 4S7 (CA)**
• **ZHANG, Xiaodong**
**Burnaby, British Columbia V5H 0A2 (CA)**

(74) Vertreter: **Patentanwaltskanzlei WILHELM & BECK**
**Prinzenstraße 13**
**80639 München (DE)**

(56) Entgegenhaltungen:
**WO-A1-2013/112759 WO-A1-2015/188281**
**WO-A1-2020/109274 DE-A1- 102017 131 304**
**DE-A1- 102018 129 731**

**Beschreibung**

Die Erfindung betrifft ein Verfahren zum Steuern eines Planarantriebssystems und ein Planarantriebssystem, das eingerichtet ist, das Verfahren zum Steuern eines Planarantriebssystems auszuführen.

Diese Patentanmeldung beansprucht die Priorität der deutschen Patentanmeldung DE 10 2020 130 795.0.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass bestromte Spulengruppen der Statoreinheit mit Antriebsmagneten mehrerer Magnetanordnungen des Läufers magnetisch wechselwirken. Aus dem Stand der Technik sind Planarantriebssysteme mit rechteckigen und längsgesteckten Spulengruppen und rechteckigen und längsgestreckten Magneteinheiten des Läufers bekannt. Ein solches Planarantriebssystem wird in der Druckschrift DE 10 2017 131 304 A1 beschrieben. Planarantriebssysteme mit rechteckigen und längsgesteckten Spulengruppen und rechteckigen und längsgestreckten Magneteinheiten des Läufers sind vorteilhaft für das lineare translative Verfahren des Läufers.

Aus dem Stand der Technik, Proceedings of DSCC2008 2008 ASME Dynamic Systems and Control Conference Oktober 20-22, 2008, Ann Arbor, Michigan, USA, sind Planarantriebssysteme mit runden Spulengruppen bekannt. Rund ausgebildete Spulengruppen sind vorteilhaft für die Rotation des Läufers, weisen jedoch erhebliche Nachteile beim linearen translativen Verfahren des Läufers auf und könne zu unruhigem und ruckhaften Verfahren führen.

Bei einem Planarantriebssystem mit rechteckig und linear angeordneten Spulengruppen und Magneteinheiten umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Die planare Statoreinheit umfasst bestrombare erste Spulengruppen, welche mit den Magneten der ersten Magneteinheit magnetisch wechselwirken, um den Läufer in die erste Richtung anzutreiben, sowie bestrombare zweite Spulengruppen, welche mit den Magneten der zweiten Magneteinheit magnetisch wechselwirken, um den Läufer in die zweite Richtung anzutreiben. Die ersten und zweiten Spulengruppen sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Zur Steuerung eines Läufers eines Planarantriebssystems kann es für bestimmte Anwendungen maßgeblich sein, neben einer Positionsänderung des Läufers, die primär durch translatorische Bewegungen entlang der ersten und zweiten Richtungen erfolgt, eine Orientierungsänderung des Läufers relativ zur Statoreinheit zu bewirken. Hierzu ist es erforderlich, den Läufer um eine senkrecht zu einer Oberfläche der Statoreinheit orientierte Rotationsachse rotieren zu können. Aufgrund der linearen Anordnung der Spulengruppen und der charakteristischen Wechselwirkung zwischen den Spulengruppen und den Magneteinheiten sind Rotationen des Läufers jedoch erschwert und auf nur wenige Grad beschränkt.

Aus der Druckschrift DE 10 2018 129731 A1 ist ein Verfahren zum Antreiben eines Läufers eines Planarantriebssystems bekannt.

Es ist daher eine Aufgabe der Erfindung, ein verbessertes Verfahren zum Steuern eines Planarantriebssystems bereitzustellen, das ein verbessertes Orientieren des Läufers ermöglicht. Eine weitere Aufgabe der Erfindung ist es, ein Planarantriebssystem bereitzustellen, das eingerichtet ist, das erfindungsgemäße Verfahren auszuführen.

Die Aufgabe wird durch ein Verfahren zum Steuern eines Planarantriebssystems gemäß dem unabhängigen Anspruch gelöst. Bevorzugte Ausführungsformen sind in den abhängigen Ansprüchen angegeben.

Nach der Erfindung wird ein Verfahren zum Steuern eines Planarantriebssystems bereitgestellt, wobei das Planarantriebssystem eine Statoreinheit mit einer Mehrzahl von Spulengruppen zum Erzeugen eines Statormagnetfelds und einen Läufer mit einer Mehrzahl von Magneteinheiten zum Erzeugen eines Läufermagnetfelds umfasst, wobei über eine magnetische Kopplung zwischen dem Statormagnetfeld und dem Läufermagnetfeld der Läufer auf der Statoreinheit antreibbar ist, wobei die Mehrzahl von Spulengruppen rechteckige ausgebildete X-Spulengruppen und rechteckig ausgebildete Y-Spulengruppen umfasst, wobei die X-Spulengruppen entlang einer X-Richtung der Statoreinheit und die Y-Spulengruppen entlang einer senkrecht zur X-Richtung orientierten Y-Richtung der Statoreinheit erstreckt sind, wobei die Mehrzahl von Magneteinheiten des Läufers rechteckig ausgebildete X-Magneteinheiten und rechteckig ausgebildete Y-Magneteinheiten umfasst, wobei die X-Magneteinheiten entlang einer X-Richtung des Läufers ausgerichtet sind, wobei die Y-Magneteinheiten entlang einer zur X-Richtung senkrecht orientierten Y-Richtung des Läufers erstreckt sind, und wobei das Verfahren umfasst: Verfahren des Läufers in eine Rotationsposition des Läufers auf dem Statormodul in einem Verfahrschritt, wobei in der Rotationsposition in jeder Orientierung des Läufers relativ zum Statormodul jede Magnetanordnung des Läufers eine Spulengruppe der Statoreinheit überdeckt, die von keiner weiteren Magnetanordnung des Läufers überdeckt wird; Ansteuern der Spulengruppen, die von den Magnetanordnungen des Läufers in der Rotationsposition überdeckt sind, und Erzeugen eines Statormagnetfelds durch jede angesteuerte Spulengruppe in einem Ansteuerungsschritt; und

Rotieren des Läufers um eine zu einer Statoroberfläche der Statoreinheit senkrecht orientierte Rotationsachse um einen vorbestimmten Drehwinkel durch die Statormagnetfelder der angesteuerten durch die Magneteinheiten des Läufers überdeckten Spulengruppen in einem Rotationsschritt.

Hierdurch kann der technische Vorteil erreicht werden, dass ein verbessertes Verfahren zum Steuern eines Planarantriebssystems bereitgestellt werden kann, bei dem eine Rotation des Läufers um eine senkrecht zu einer Statoroberfläche einer Statoreinheit des Planarantriebssystems orientierte Rotationsachse um einen beliebigen Drehwinkel ermöglicht ist. Hierzu wird der Läufer zu einer Rotationsposition auf der Statoreinheit verfahren und in dieser Rotationsposition durch Ansteuern geeigneter Spulengruppen der Statoreinheit um einen vorbestimmten Drehwinkel rotiert. Die Rotationsposition ist hierbei dadurch gekennzeichnet, dass in der Rotationsposition für jede Magneteinheit des Läufers wenigstens eine Spulengruppe der Statoreinheit besteht, die ausschließlich von der jeweiligen Magneteinheit des Läufers überdeckt wird. Hierdurch kann der Vorteil erreicht werden, dass durch Ansteuern der jeweiligen Spulengruppe und das durch das Ansteuern der Spulengruppe erzeugte Magnetfeld ausschließlich die die jeweilige Spulengruppe überdeckende Magneteinheit des Läufers beeinflusst wird.

Ein Überdecken einer Spulengruppe der Statoreinheit durch eine Magneteinheit des Läufers wird im Sinne der Anmeldung erreicht, wenn in einer beliebigen Positionierung des Läufers auf der Statoreinheit eine Magneteinheit des Läufers wenigstens teilweise über einer Spulengruppe angeordnet ist.

Bei einer exklusiven Überdeckung einer Spulengruppe durch nur einer Magneteinheit des Läufers in einer bestimmten Positionierung ist keine weitere Magneteinheit des Läufers in der jeweiligen Positionierung wenigstens teilweise oberhalb der jeweiligen Spulengruppe angeordnet. Bei einer Rotation des Läufers in der Rotationsposition ändern sich aufgrund der Rotation des Läufers die Positionierungen der einzelnen Magneteinheiten des Läufers, sodass die Magneteinheiten im Laufe der Rotation oberhalb verschiedener Spulengruppen angeordnet sind. Für verschiedene Orientierungen des Läufers in der Rotationsposition kann jede Magneteinheit oberhalb verschiedener Spulengruppen angeordnet sein. Die von einer Magneteinheit ausschließlich überdeckte Spulengruppe, die somit von keiner anderen Magneteinheit überdeckt ist, kann somit für verschiedene Orientierungen des Läufers unterschiedlich sein.

Aufgrund der Geometrie des Planarantriebssystems mit den rechteckig und längsgetreckten Spulengruppen, die als X-Spulengruppen und Y-Spulengruppen in zwei senkrecht orientierte Richtungen an der Statoreinheit angeordnet sind, und den rechteckig und längsgetreckten Magneteinheiten, die als X-Magneteinheiten und Y-Magneteinheiten in zwei senkrecht orientierte Richtungen am Läufer angeordnet sind, ergibt sich ausschließlich für die Rotationsposition, dass in jeder Orientierung des Läufers für jede Magneteinheit eine Spulengruppe existiert, die ausschließlich von dieser Magneteinheit überdeckt ist.

Auf der Statoreinheit kann aufgrund der Symmetrie der Statoreinheit jedoch eine Mehrzahl von entsprechenden Rotationspositionen gegeben sein.

Aufgrund der rechteckigen Ausbildung sowohl der Spulengruppen als auch der Magneteinheiten und der Ausrichtungen der Spulengruppen entlang der zwei senkrecht zueinander orientierten X- und Y-Richtungen in der Statoreinheit bzw. der Ausrichtung der Magneteinheiten entlang der zwei senkrecht zueinander orientierten X- und Y-Richtungen des Läufers ergeben sich für beliebige Positionen des Läufers, die nicht die Rotationsposition sind, nicht für jede Orientierung des Läufers relativ zur Statoreinheit für jede Magneteinheit des Läufers eine Spulengruppe, die ausschließlich von der jeweiligen Magneteinheit überdeckt wird.

Stattdessen tritt bei beliebigen Positionen, die nicht die Rotationsposition sind, der Fall auf, dass bei einer bestimmten Orientierung des Läufers die Magneteinheiten des Läufers ausschließlich Spulengruppen überdecken, die durch mehrere Magneteinheiten des Läufers überdeckt werden. Aufgrund der mehrfachen Überdeckung einer Spulengruppe durch mehrere Magneteinheiten bewirkt eine Ansteuerung der jeweiligen Spulengruppe eine Beeinflussung aller die jeweilige Spulengruppe überdeckenden Magneteinheiten des Läufers. Dies kann dazu führen, dass eine Rotation des Läufers gehemmt oder verhindert ist, indem auf die Magneteinheiten des Läufers verschieden ausgerichtete Magnetfelder verschiedener Spulengruppen einwirken. Aufgrund der Geometrie des Läufers bzw. der Anordnung der einzelnen Magneteinheiten kann hierdurch verhindert sein, dass gegenüberliegende Seiten des Läufers in entgegengesetzte Richtung bewegt werden, was für eine Rotation des Läufers maßgeblich ist.

Indem in der Rotationsposition für jede Orientierung des Läufers für jede Magneteinheit eine Spulengruppe besteht, die ausschließlich von der jeweiligen Magneteinheit überdeckt wird, kann durch Ansteuern der jeweiligen durch lediglich eine Magneteinheit überdeckten überdeckten Spulengruppen jede Magneteinheit durch das Magnetfeld der jeweils durch diese Magneteinheit überdeckten Spulengruppe beeinflusst werden.

Hierdurch kann jede Magneteinheit durch entsprechende Ansteuerung der durch diese Magneteinheit überdeckten Spulengruppe mit einer entsprechenden magnetischen Kraft beaufschlagt werden, wobei die auf die jeweiligen Magneteinheiten einwirkenden magnetischen Kräfte voneinander unabhängig durch entsprechendes Ansteuern der jeweiligen Spulengruppen generiert werden können. Durch das Einwirken unabhängiger und somit gegebenenfalls in unterschiedliche Richtungen weisender magnetischer Kräfte auf die verschiedenen Magneteinheiten des Läufers kann für jede Orientierung des Läufers eine Rotation des Läufers relativ zur Statoreinheit erreicht werden. Somit können Rotationen des Läufers um beliebige Drehwinkel bewirkt werden.

Eine Orientierung des Läufers ist im Sinne der Anmeldung eine Ausrichtung einer Vorzugsrichtung des Läufers relativ zu X- und Y-Richtungen eines durch die Statoreinheit aufgespannten Koordinatensystems. Eine Orientierungsänderung des Läufers kann durch eine Rotation um eine parallel zur Z-Achse des durch die Statoreinheit aufgespannten Koordinatensystems orientierte Rotationsachse erreicht werden.

Eine Position des Läufers ist im Sinne der Anmeldung eine Lage des Läufers auf der Statoreinheit. Eine Positionsänderung des Läufers kann über eine translatorische Bewegung entlang der X- und Y-Richtungen der Statoreinheit erreicht werden. Eine Position des Läufers kann insbesondere durch eine Positionierung eines Zentrums des Läufers auf der Statoreinheit bestimmt sein.

Ein Drehwinkel ist im Sinne der Anmeldung ein Raumwinkel zwischen der Vorzugsrichtung des Läufers und der X- bzw. Y-Richtung des durch die Statoreinheit aufgespannten Koordinatensystems.

Nach einem zweiten Aspekt der Erfindung wird ein Planarantriebssystem bereitgestellt, wobei das Planarantriebssystem eine Statoreinheit mit einer Mehrzahl von Spulengruppen zum Erzeugen eines Statormagnetfelds, wenigstens einen Läufer mit einer Mehrzahl von Magneteinheiten zum Erzeugen eines Läufermagnetfelds und eine Steuereinheit zum Steuern des Planarantriebssystems umfasst, wobei über eine magnetische Kopplung zwischen dem Statormagnetfeld und dem Läufermagnetfeld der Läufer auf der Statoreinheit antreibbar ist, wobei die Mehrzahl von Spulengruppen rechteckig ausgebildete X-Spulengruppen und rechteckig ausgebildete Y-Spulengruppen umfasst, wobei die X-Spulengruppen entlang einer X-Richtung der Statoreinheit und die Y-Spulengruppen entlang einer senkrecht zur X-Richtung orientierten Y-Richtung der Statoreinheit ausgerichtet sind, wobei die Mehrzahl von Magneteinheiten des Läufers rechteckig ausgebildete X-Magneteinheiten und rechteckig ausgebildete Y-Magneteinheiten umfasst, wobei die X-Magneteinheiten entlang einer X-Richtung des Läufers ausgerichtet sind, wobei die Y-Magneteinheiten entlang einer zur X-Richtung senkrecht orientierten Y-Richtung des Läufers ausgerichtet sind, und wobei das Planarantriebssystem eingerichtet ist, das erfindungsgemäße Verfahren zum Steuern eines Planarantriebssystems auszuführen.

Hierdurch kann der technische Vorteil erreicht werden, dass ein Planarantriebssystem mit den genannten Vorteilen des erfindungsgemäßen Verfahrens zum Steuern des Planarantriebssystems bereitgestellt werden kann.

Nach einer Ausführungsform umfasst die Statoreinheit eine Mehrzahl von Statorsegmenten, wobei die Statorsegmente rechteckig ausgebildet sind und paarweise in X-Richtung oder Y-Richtung nebeneinander angeordnet sind, wobei jedes Statorsegment jeweils X-Spulengruppen und Y-Spulengruppen umfasst, die von X-Spulengruppen und Y-Spulengruppen andere Statorsegmente separiert sind, und wobei die Rotationsposition eine Position auf der Statoreinheit ist, in der vier Statorsegmente aneinander angrenzen.

Hierdurch kann der technische Vorteil erreicht werden, dass eine präzise Ansteuerung der zur Rotation des Läufers in der Rotationsposition benötigten Spulengruppen erreicht werden kann. Hierdurch kann eine präzise Rotation des Läufers bewirkt werden. Indem der Läufer, bzw. insbesondere das Zentrum des Läufers, auf einem Berührungspunkt von vier aneinander angrenzenden Statorsegmenten positioniert wird, wird erreicht, dass aufgrund der Anordnung der einzelnen Magneteinheiten des Läufers die Spulengruppen, die ausschließlich durch eine Magneteinheit des Läufers überdeckt werden, jeweils in einem der vier angrenzenden Statorsegmente angeordnet ist. Indem die einzelnen Spulengruppen der vier aneinander angrenzenden Statorsegmente voneinander unabhängig ansteuerbar sind, ist eine individuelle Ansteuerung der durch die Magneteinheiten überdeckten Spulengruppen der einzelnen Statorsegmente ermöglicht. Jede Magneteinheit des Läufers kann somit durch entsprechende Ansteuerung der jeweiligen Spulengruppen der einzelnen Statorsegmente mit einer individuellen magnetischen Kraft beaufschlagt werden, sodass eine Rotation des Läufers um die zur Z-Achse des durch die Statoreinheit aufgespannten Koordinatensystems orientierte Rotationsachse ermöglicht ist.

Statorsegment sind im Sinne der Anmeldung dadurch gekennzeichnet, dass X-Spulengruppen und Y-Spulengruppen sich über die gesamte Länge oder Breite des Statorsegments erstrecken. X-Spulengruppen in X-Richtung nebeneinander angeordneter Statorsegmente können in X-Richtung auf einer Linie angeordnet aber dennoch voneinander separierte Spulengruppen sein. Analoges gilt für Y-Spulengruppen.

Hierdurch kann erreicht werden, dass auf einer Linie angeordnete Spulengruppen separat voneinander angesteuert werden können.

Die Statorsegmente sind in der genannten Ausführungsform derart angeordnet, dass jedes Statorsegment zumindest ein in X-Richtung benachbartes Statorsegment und zumindest ein in Y-Richtung benachbartes Statorsegment aufweist.

Nach einer Ausführungsform umfasst der Ansteuerungsschritt:

Bestromen jeder der von den Magneteinheiten überdeckten Spulengruppen mit einer individuellen Bestromung in einem ersten Bestromungsschritt.

Hierdurch kann der technische Vorteil erreicht werden, dass eine präzise Ansteuerung der zur Rotation des Läufers in der Rotationsposition benötigten Spulengruppen und damit verbunden eine präzise Rotation des Läufers um einen vorbestimmten Drehwinkel ermöglicht ist. Indem die durch die Magneteinheiten des Läufers in der Rotationsposition überdeckte Spulengruppen individuell angesteuert werden, können die durch die jeweiligen Spulengruppen erzeugten Statormagnetfelder individuell angepasst werden. Durch die Anpassung der durch die jeweiligen Spulengruppen erzeugten Statormagnetfelder können die magnetischen Kräfte, die auf die einzelnen Magneteinheiten des Läufers einwirken, individuell angepasst werden, sodass eine Gesamtheit der auf die einzelnen Magneteinheiten des Läufers einwirkenden magnetischen Kräfte eine Rotation des Läufers um die Rotationsachse bewirken. Durch das individuelle Ansteuern der jeweils ausgewählten Spulengruppen kann darüber hinaus verhindert werden, dass zusätzliche Spulengruppen angesteuert werden, deren Statormagnetfelder gegebenenfalls eine Rotation des Läufers behindern, indem diese nachteilig auf die einzelnen Magneteinheiten des Läufers einwirken.

Eine individuelle Ansteuerung einer Spulengruppe ist im Sinne der Anmeldung das Bestromen der Spulengruppe mit einem individuellen Erregerstrom. Die Erregerströme zweier individuell bestromter Spulengruppen können sich hierbei in wenigstens einem Wert unterscheiden.

Nach einer Ausführungsform umfasst der Ansteuerungsschritt:

Bestimmen einer durch ein Statormagnetfeld einer Spulengruppe auf eine die Spulengruppe überdeckende Magneteinheit wirkende magnetische Kraft in einem Kraftbestimmungsschritt;
Bestimmen einer individuellen Bestromung für jede der von den Magneteinheiten überdeckten Spulengruppen in einem Bestromungsbestimmungsschritt, derart dass durch eine Gesamtheit der durch die Statormagnetfelder gemäß der individuellen Bestromungen der Spulengruppen auf die Magneteinheiten wirkenden magnetischen Kräfte ein Drehmoment des Läufers um die Rotationsachse generiert wird, das eingerichtet ist, die Rotation des Läufers um den Drehwinkel zu bewirken.

Hierdurch kann der technische Vorteil erreicht werden, dass eine präzise Ansteuerung und Bestromung der Spulengruppen und damit verbunden eine präzise Rotation des Läufers um die Rotationsachse erreicht werden kann. Hierzu wird zunächst für jede Magneteinheit des Läufers eine magnetische Kraft bestimmt, die durch das Statormagnetfeld einer mit einer bestimmten Bestromung bestromten Spulengruppe auf die jeweilige Magneteinheit einwirkt. Nach Erkenntnis der Relation zwischen Bestromung der jeweiligen Spulengruppe und der durch das Magnetfeld der bestromten Spulengruppe auf die jeweilige Magneteinheit einwirkenden magnetischen Kraft, werden die durch die Magneteinheiten des Läufers in der Rotationsposition überdeckten Spulengruppe individuell derart bestromt, dass die Gesamtheit der auf die Magneteinheiten einwirkenden magnetischen Kräfte zu einem auf den Läufer einwirkenden Drehmoment führen, das eingerichtet ist, den Läufer um den vorbestimmten Drehwinkel zu rotieren. Durch Bestimmung dieser Relationen zwischen individueller Bestromung der einzelnen Spulengruppen und der zu erzielenden Rotation um den gewünschten Drehwinkeln kann für Rotationen beliebiger Drehwinkel eine präzise Bestromung der einzelnen Spulengruppen erreicht werden. Hierdurch kann eine präzise Steuerung und insbesondere eine präzise Rotation des Läufers bewirkt werden.

Nach einer Ausführungsform umfasst der Kraftbestimmungsschritt:

Berechnen des für die Rotation um den vorbestimmten Drehwinkel benötigten Drehmoments in einem Momentberechnungsschritt;
Berechnen der zur Erzeugung des Drehmoments benötigten und auf die einzelnen Magneteinheiten des Läufers einwirkenden magnetischen Kräfte in einem Kraftberechnungsschritt; und wobei der Bestromungsbestimmungsschritt umfasst:
Berechnen der zur Erzeugung der berechneten magnetischen Kräfte notwendigen individuellen Bestromungen der Spulengruppen in einem Bestromungsberechnungsschritt.

Hierdurch kann der technische Vorteil erreicht werden, dass eine präzise Ermittlung der auf die einzelnen Magneteinheiten des Läufers einwirkenden magnetischen Kräfte und damit verbunden eine präzise Bestimmung der Bestromung, die zu einer Rotation des Läufers um einen vorbestimmten Drehwinkel führen, erreicht werden. Hierzu wird zunächst für einen vorbestimmten Drehwinkel, um den der Läufer rotiert werden soll, das Drehmoment berechnet, das für eine derartige Rotation auf den Läufer einzuwirken hat. Hierauf basierend werden die einzelnen magnetischen Kräfte, die auf die jeweiligen Magneteinheiten des Läufers einwirken müssen, berechnet, sodass die Gesamtheit der auf die Magneteinheiten einwirkenden magnetischen Kräfte zu dem zuvor bestimmten Drehmoment führen. Hierdurch kann für beliebige Drehwinkel eine präzise Bestimmung der auf die einzelnen Magneteinheiten einwirkenden magnetischen Kräfte ermittelt werden. Für einen beliebigen Drehwinkel ist somit für jede Magneteinheit des Läufers in der Rotationsposition die benötigte magnetische Kraft, die zu einer Rotation um den vorbestimmten Drehwinkel führt, ermittelt.

Zusätzlich wird eine Relation errechnet zwischen der individuellen Bestromung der durch die Magneteinheiten des Läufers in der Rotationsposition überdeckten Spulengruppen und der auf die jeweiligen Magneteinheiten einwirkenden magnetischen Kräfte der durch jeweils bestromten Spulengruppen erzeugten Statormagnetfelder. Für einen beliebigen Drehwinkel ist somit für jede der durch die Magneteinheiten des Läufers in der Rotationsposition überdeckten Spulengruppen eine benötigte Bestromung ermittelt. Die hierdurch erzeugte Relation zwischen Rotation um einen vorbestimmten Drehwinkel und individueller Bestromung der durch die Magneteinheiten des Läufers in der Rotationsposition überdeckten Spulengruppen kann beispielsweise in einer entsprechenden Datenbank hinterlegt sein. Durch die Berechnung der benötigten Bestromung für jede der durch die Magneteinheiten des Läufers in der Rotationsposition überdeckten Spulengruppen kann eine präzise Ansteuerung der Spulengruppen und damit verbunden eine präzise Rotation des Läufers erreicht werden.

Die Berechnung des benötigten Drehmoments kann Faktoren wie die Ausmaße, das Gewicht, die Beladung oder andere Eigenschaften des Läufers berücksichtigen.

Die Berechnung der zur Erzeugung des gewünschten Drehmoments erforderlichen Bestromung kann die Faktoren wie die Ausmaße und magnetischen Eigenschaften der Magneteinheiten beziehungsweise des Läufermagnetfelds und damit verbunden Eigenschaften der magnetischen Kopplung der zwischen Statormagnetfeld und Läufermagnetfeld berücksichtigen. Hierzu kann insbesondere die Flughöhe des Läufers, sprich die Distanz in Z-Richtung zwischen Magneteinheit und Spulengruppe berücksichtigt werden.

Nach einer Ausführungsform werden die Berechnungen des Drehmoments und der Kräfte in dem Kraftbestimmungsschritt und der Bestromungen in dem Bestromungsbestimmungsschritt durch eine Steuereinheit des Planarantriebssystems während der Steuerung des Läufers durchgeführt.

Hierdurch kann der technische Vorteil erreicht werden, dass eine schnelle Steuerung des Läufers ermöglicht ist, indem unmittelbar während des Verfahrens des Läufers bzw. während des Steuerns des Läufers die zur Rotation des Läufers um den vorbestimmten Rotationswinkel benötigten Bestromungswerte der einzelnen durch die Magneteinheiten des Läufers überdeckten Spulengruppen errechnet werden. Somit kann unmittelbar nach Bestimmung des Drehwinkels, um den der Läufer rotiert werden soll, die Rotation durch entsprechende Bestromung der einzelnen Spulengruppen erreicht werden.

Nach einer Ausführungsform umfassen die Berechnungen des Drehmoments und/oder der Kräfte in dem Kraftbestimmungsschritt und/oder der Bestromungen in dem Bestromungsbestimmungsschritt Simulationen, wobei die Simulationen auf einer Modellbeschreibung eines Verhältnisses zwischen Bestromung der Spulengruppen und auf die Magneteinheiten einwirkender magnetischer Kräfte und/oder auf einer Modellbeschreibung eines Verhältnisses zwischen Bestromung der Spulengruppen und auf den Läufer einwirkendes Drehmoment basieren.

Hierdurch kann der technische Vorteil erreicht werden, dass eine präzise Steuerung des Läufers und insbesondere eine präzise Rotation des Läufers bereitgestellt werden kann. Insbesondere kann Rechenleistung der Steuereinheit des Planarantriebssystems eingespart werden, indem zur Bestimmung der für eine Rotation um einen beliebigen Drehwinkel benötigten individuellen Bestromung der durch die Magneteinheiten des Läufers überdeckten Spulengruppen eine zuvor durchgeführte Simulation basierend auf einer Modellbeschreibung des Verhältnisses zwischen Bestromung der Spulengruppen und auf die Magneteinheiten einwirkender magnetischer Kräfte und damit verbunden der Rotation um den vorbestimmten Drehwinkel durchgeführt werden. Die Ergebnisse der Simulation können beispielsweise in einer Datenbank oder einer Look-up Tabelle abgespeichert werden, sodass zur Rotation des Läufers um einen vorbestimmten Drehwinkel die dazu benötigten individuellen Bestromungen der einzelnen durch den Läufer überdeckten Spulengruppen nicht erneut durch die Steuereinheit berechnet, sondern lediglich aus der Datenbank bzw. Look-up-Tabelle ausgelesen werden müssen. Hierdurch kann Berechnungszeit und Rechenkapazität der Steuereinheit zur Durchführung der Rotation des Läufers eingespart werden.

Nach einer Ausführungsform umfasst der Verfahrschritt:
Bestimmen der Spulengruppen der Statoreinheit, die von der Magnetanordnungen des Läufers überdeckt werden, in einem Spulenbestimmungsschritt.

Hierdurch kann der technische Vorteil erreicht werden, dass eine präzise Steuerung des Läufers erreicht wird, indem ausschließlich die Spulengruppen angesteuert bzw. bestromt werden, die zum Verfahren bzw. zur Rotation des Läufers benötigt werden. Hierzu werden die Spulengruppen, die durch die Magneteinheiten des Läufers in der Rotationsposition überdeckt werden, bestimmt. Diese können offensichtlich in Abhängigkeit der aktuellen Position des Läufers auf der Statoreinheit, der gewünschten Verfahrrichtung des Läufers und der aktuellen Orientierung des Läufers relativ zur Statoreinheit verschieden sein.

Nach Bestimmen der durch die Magneteinheiten des Läufers überdeckten Spulengruppen, werden ausschließlich diese zum Verfahren des Läufers angesteuert und bestromt. Das Verfahren des Läufers kann hierbei ein linear translatorisches Verfahren oder eine Rotation umfassen. Im Falle einer Rotation kann durch die Auswahl der geeigneten Spulengruppen eine Ansteuerung von Spulengruppen vermieden werden, die aufgrund der jeweiligen Ausrichtung der entsprechenden Magnetfelder eine Rotation des Läufers behindern oder hemmen.

Nach einer Ausführungsform umfasst der Spulenbestimmungsschritt:

Detektieren der Läufermagnetfelder der einzelnen Magnetanordnungen des Läufers in der Rotationsposition durch Magnetfeldsensoren der Statoreinheit in einem Detektionsschritt;

Definieren eines Überdeckungsbereichs für jede Magnetanordnung in einem Definitionsschritt, wobei der Überdeckungsbereich einen Bereich der Statoreinheit kennzeichnet, der die das Läufermagnetfeld der jeweiligen Magnetanordnung detektierenden Magnetfeldsensoren umfasst; und

Ermitteln der Spulengruppen, die wenigstens teilweise in einem Überdeckungsbereich angeordnet sind, in einem Ermittlungsschritt.

Hierdurch kann der technische Vorteil erreicht werden, dass eine präzise Bestimmung der Spulengruppen und damit verbunden eine präzise Steuerung des Läufers ermöglicht ist. Zur Bestimmung der durch die Magneteinheiten des Läufers überdeckten Spulengruppen werden durch Messungen von Magnetfeldsensoren der Statoreinheit die Läufermagnetfelder der einzelnen Magneteinheiten des Läufers detektiert. Anhand der Läufermagnetfelder kann somit relativ zu den Magnetfeldsensoren eine exakte Positionierung der einzelnen Magneteinheiten des Läufers durchgeführt werden. Darauf folgend wird ein Überdeckungsbereich definiert, der einen Bereich der Statoreinheit beschreibt, der von einer der Magneteinheiten des Läufers überdeckt wird. Der Überdeckungsbereich kann für jede Magneteinheit des Läufers definiert werden. Spulengruppen, die wenigstens teilweise in den Überdeckungsbereichen angeordnet sind, werden darauf folgend als Spulengruppen ermittelt, die durch die jeweiligen Magneteinheiten des Läufers überdeckt werden. Durch die Messungen der Läufermagnetfelder der einzelnen Magneteinheiten können für jede Position und Orientierung des Läufers die entsprechenden durch Magneteinheiten überdeckten Spulengruppen ermittelt werden. Indem ausschließlich die überdeckten Spulengruppen angesteuert werden, kann eine präzise Steuerung des Läufers erreicht werden.

Nach einer Ausführungsform umfasst der Verfahrschritt:

Bestromen einer Mehrzahl von Spulengruppen mit einer gemeinsamen Soll-Bestromung in einem zweiten Bestromungsschritt.

Hierdurch kann der technische Vorteil erreicht werden, dass eine Vereinfachung der Steuerung und eine Präzisierung der Steuerung des Läufers ermöglicht sind. Indem während des ausschließlich linearen Verfahrens des Läufers, in dem der Läufer in einer linearen Translationsbewegung bewegt wird, mehrere Spulengruppen mit einer gemeinsamen Sollbestromung bestromt werden, kann der Steuerungsprozess vereinfacht werden, da nicht für jede Spulengruppe eine individuelle Bestromung bestimmt bzw. errechnet werden muss.

Durch die gemeinsame Bestromung der für das Verfahren des Läufers zu bestromenden Spulengruppen kann darüber hinaus Rechenkapazität der Steuereinheit eingespart werden.

Nach einer Ausführungsform umfasst der Läufer zwei X-Magneteinheiten und zwei Y-Magneteinheiten, wobei die X-Magneteinheiten in Y-Richtung an gegenüberliegenden Seiten des Läufers und die Y-Magneteinheit in X-Richtung an gegenüberliegenden Seiten des Läufers angeordnet sind, und wobei in der Rotationsposition durch die Magneteinheiten wenigstens vier Spulengruppen überdeckt werden, und wobei jede der vier Spulengruppen jeweils in einem Statorsegment angeordnet ist.

Hierdurch kann der technische Vorteil erreicht werden, dass eine präzise Rotation des Läufers durch individuelles Ansteuern und Bestromen der durch die Magneteinheiten des Läufers in der Rotationsposition überdeckten Spulengruppen bewirkt wird. Indem durch die vier Magneteinheiten des Läufers in der Rotationsposition vier Spulengruppen der Statoreinheit überdeckt werden, die ausschließlich von einer Magneteinheit überdeckt werden, und jeweils in vier separaten Statorsegmenten angeordnet sind, kann jede Spulengruppe präzise individuell angesteuert und bestromt werden.

In der genannten Ausführungsform wird durch jede der vier Magneteinheiten des Läufers in der Rotationsposition eine Spulengruppe überdeckt, die von keiner weiteren Magneteinheit überdeckt wird. Von der Gesamtheit der vier Magneteinheiten werden somit vier Spulengruppen exklusiv überdeckt. Die vier Spulengruppen sind hierbei in den vier aneinander angrenzenden Statorsegmenten angeordnet, wobei in jedem Statorsegment genau eine der vier exklusiv überdeckten Spulengruppen angeordnet ist.

Nach einer Ausführungsform ist der Drehwinkel für jeden Wert zwischen 0° und 360° wählbar.

Hierdurch kann der technische Vorteil einer verbesserten Rotation des Läufers und damit verbunden einer verbesserten Steuerung des Läufers bewirkt werden. Durch das erfindungsgemäße Verfahren kann eine Rotation des Läufers um einen beliebigen Drehwinkel zwischen 0° und 360° bewirkt werden. Eine mehrfache Umdrehung des Läufers, die ein Vielfaches der hier beschriebenen Drehwinkel umfasst, ist ebenfalls durch die Erfindung abgedeckt. Ebenfalls sind Rotationen in entgegengesetzte Drehrichtungen umfasst.

Erfindungsgemäß ist eine X-Spulengruppe eingerichtet, ein Statormagnetfeld mit einer Y-Komponente und einer Z-Komponente zu erzeugen, wobei eine Y-Spulengruppe eingerichtet ist, ein Statormagnetfeld mit einer X-Komponente und einer Z-Komponente zu erzeugen, wobei eine X-Komponente entlang der X-Richtung, eine Y-Komponente entlang der Y-Richtung und eine Z-Komponente entlang einer zur X-Richtung und zur Y-Richtung senkrecht orientierten Z-Richtung der Statoreinheit ausgerichtet sind.

Hierdurch kann der technische Vorteil erreicht werden, dass eine verbesserte Steuerung des Läufers ermöglicht ist. Durch die entlang der X-Richtung des durch die Magneteinheit aufgespannten Koordinatensystems ausgerichteten X-Spulengruppen ein Statormagnetfeld mit einer Y-Komponente und einer Z-Komponente generiert werden, während durch die entlang der Y-Richtung ausgerichteten Y-Spulengruppen ein Statormagnetfeld mit einer X-Komponente und einer Z-Komponente generiert werden kann. Durch Bestromen der einzelnen X- bzw. Y-Spulengruppen kann somit eine magnetische Kraft in Z-Richtung auf den zu steuernden Läufer einwirken, wodurch eine Bewegung des Läufers in Z-Richtung bzw. der Schwebezustand des Läufers oberhalb der Statoroberfläche der Statoreinheit bewirkt werden kann. Darüber hinaus können magnetische Kräfte in X- bzw. Y-Richtung oder einer beliebig kombinierten Richtung auf den steuernden Läufer einwirken, wodurch eine entsprechende translatorische Bewegungen des Läufers innerhalb der XY-Ebene des durch die Statoreinheit aufgespannten Koordinatensystems bewirkt werden. Dies erlaubt eine präzise Bewegung des Läufers in Form einer beliebig ausgestalteten translatorischen Bewegung.

Erfindungsgemäß ist eine X-Magneteinheit eingerichtet, ein Läufermagnetfeld mit einer Y-Komponente und einer Z-Komponente zu erzeugen, wobei eine Y-Magneteinheit eingerichtet ist, ein Läufermagnetfeld mit einer X-Komponente und einer Z-Komponente zu erzeugen, wobei eine X-Komponente entlang der X-Richtung, eine Y-Komponente entlang der Y-Richtung und eine Z-Komponente entlang einer zur X-Richtung und zur Y-Richtung senkrecht orientierten Z-Richtung des Läufers ausgerichtet sind.

Hierdurch kann der technische Vorteil erreicht werden, dass eine präzise Steuerung des Läufers ermöglicht ist. Durch das Statormagnetfeld mit Y- und Z-Komponenten der X-Magneteinheiten und bei paralleler Ausrichtung der X-Magneteinheiten zu den X-Spulengruppen der Statoreinheit kann eine Kopplung zwischen den Statormagnetfeldern der X-Spulengruppen und den Läufermagnetfeldern der X-Magneteinheiten erreicht werden. Hierdurch kann eine Steuerung des Läufers in Y-Richtung der Statoreinheit bewirkt werden. Durch die Läufermagnetfelder mit X- und Z-Komponenten der Y-Magneteinheiten und bei paralleler Ausrichtung der Y-Magneteinheiten zu den Y-Spulengruppen kann wiederum eine Kopplung der Statormagnetfelder der Y-Spulengruppen und der Läufermagnetfelder der Y-Magneteinheiten erreicht werden und eine Steuerung des Läufers in X-Richtung der Statoreinheit bewirkt werden. Dies ermöglicht eine präzise Steuerung des Läufers.

Die Erfindung wird anhand der beigefügten Figuren näher erläutert. Hierbei zeigen:

Fig. 1 eine schematische Darstellung eines Planarantriebssystems mit einer Statoreinheit und einem Läufer gemäß einer Ausführungsform;

Fig. 2 eine schematische Darstellung eines Statormoduls der Statoreinheit in Fig. 1;

Fig. 3 eine schematische Darstellung einer Unterseite eines Läufers gemäß einer Ausführungsform;

Fig. 4 eine schematische Explosionsdarstellung eines Statorsegments der Statoreinheit und einer Magnetanordnung des Läufers in Fig. 1;

Fig. 5 eine schematische Darstellung des Läufers aus Fig. 1;

Fig. 6 eine schematische Darstellung des Läufers aus Fig. 5 auf der Statoreinheit in einer nicht rotierten Orientierung;

Fig. 7 eine schematische Darstellung des Läufers auf der Statoreinheit in einer rotierten Orientierung;

Fig. 8 ein Flussdiagramm eines Verfahrens zum Steuern eines Planarantriebssystems gemäß einer Ausführungsform; und

Fig. 9 ein weiteres Flussdiagramm des Verfahrens zum Steuern eines Planarantriebssystems gemäß einer weiteren Ausführungsform.

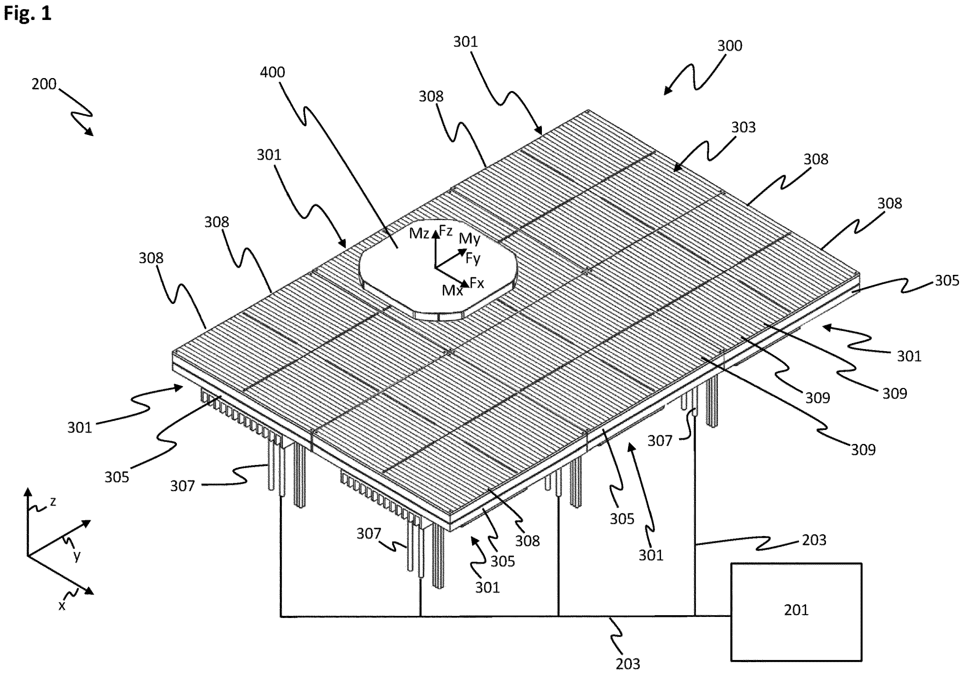

Fig. 1 zeigt eine schematische Ansicht eines Planarantriebssystems 200 mit einer Statoreinheit 300 und einem Läufer 400.

Gemäß der Ausführungsform in Fig. 1 umfasst das Planarantriebssystem eine Steuereinheit 201, eine Statoreinheit 300 und einen Läufer 400. Die Steuereinheit 201 ist über eine Datenverbindung 203 mit der Statoreinheit 300 verbunden. Die Steuereinheit 201 ist eingerichtet, ein erfindungsgemäßes Verfahren 100 zum Steuern eines Planarantriebssystems 200 auszuführen.

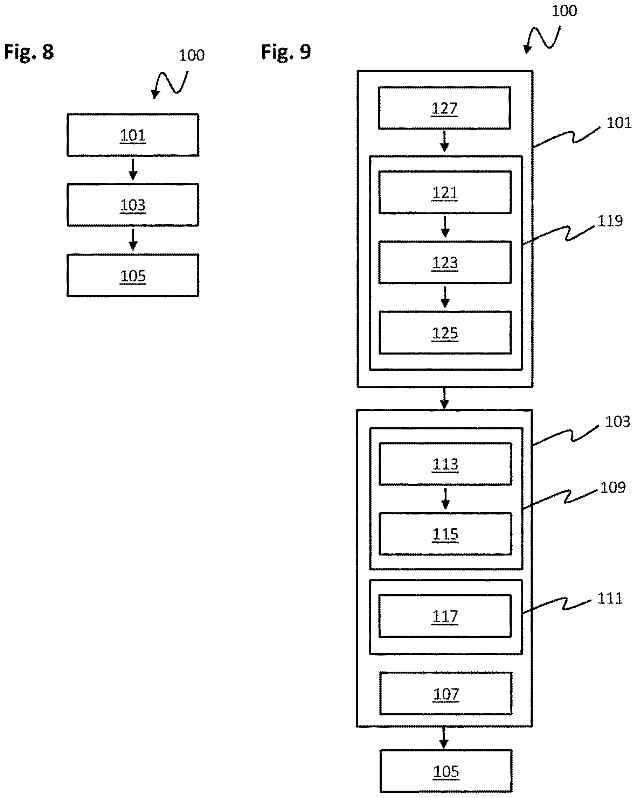

Für eine detaillierte Beschreibung des erfindungsgemäßen Verfahrens zum Steuern eines Planarantriebssystems 200 wird auf die Beschreibung zu den Fig. 8 und Fig. 9 verwiesen.

In der gezeigten Ausführungsform umfasst die Statoreinheit 300 eine Mehrzahl von Statormodulen 301, die entlang einer X-Richtung und einer Y-Richtung der Statoreinheit 300 nebeneinander angeordnet sind und eine zusammenhängende ebene Statoroberfläche 303 der Statoreinheit 300 bilden. In der gezeigten Ausführungsform umfasst die Statoreinheit 300 sechs Statormodule 301. Die Anzahl der miteinander verbundenen Statormodule 301 einer Statoreinheit 300 soll jedoch nicht hierauf beschränkt sein und kann beliebig variieren. So kann eine erfindungsgemäße Statoreinheit 300 aus nur einem Statormodul 301, aber auch aus einer Mehrzahl an beliebig angeordneten, verbundenen Statormodulen 301 bestehen, die dann eine zusammenhängende Statoroberfläche 303 bilden. In der gezeigten Ausführungsform ist die Steuereinheit 201 mit jedem Statormodul 301 verbunden, sodass jedes Statormodul 301 individuell ansteuerbar ist. In Fig. 1 sind aufgrund der perspektivischen Darstellung nicht alle Verbindungen zu allen Statormodulen 301 sichtbar.

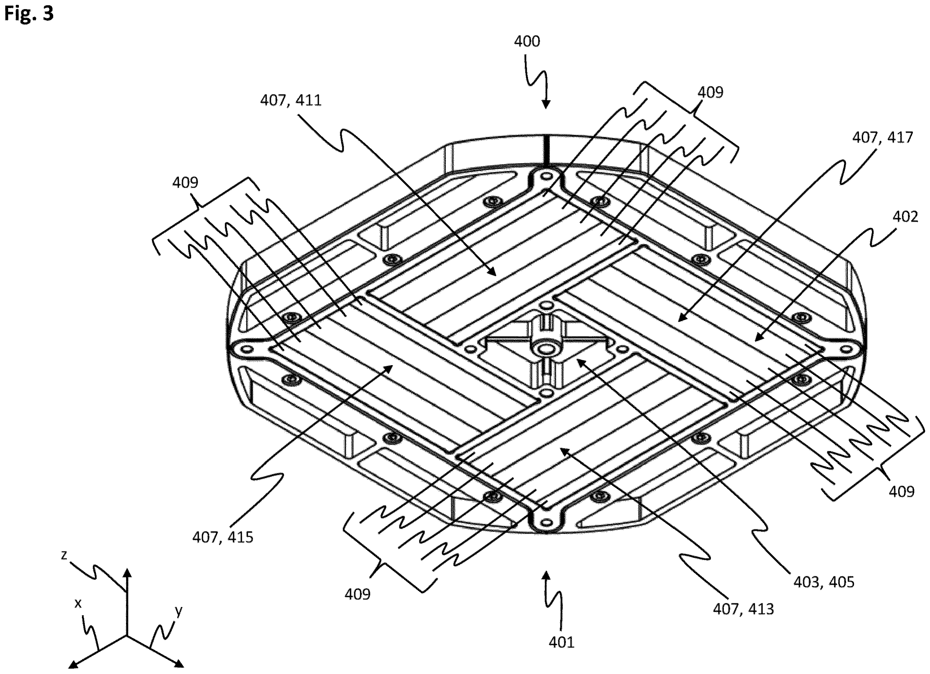

Jedes der Statormodule 301 weist vier Statorsegmente 308 auf. Jedes Statorsegment umfasst X-Spulengruppen und Y-Spulengruppen, die jeweils entlang der X-Richtung oder der Y-Richtung orientiert sind. Für eine detaillierte Beschreibung der Spulengruppen wird auf Fig. 3 verwiesen.

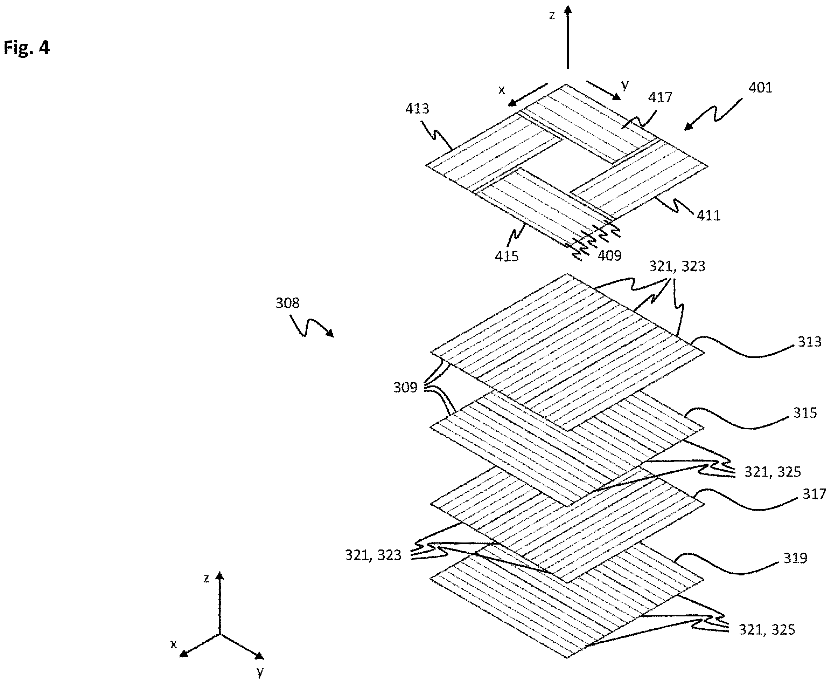

Die Statorsegmente 308 sind in der gezeigten Ausführungsform quadratisch ausgebildet und entlang der X-Richtung und der Y-Richtung fluchtend an einander anschließend angeordnet. Jedes Statorsegment 308 umfasst eine Mehrzahl von bestrombaren Statorleitern 309, die wie zu Fig. 4 beschrieben in den Spulengruppen zusammengefasst sind und entlang der X-Richtung oder entlang der Y-Richtung (in Fig. 1 nicht dargestellt) orientiert sind. Über eine Bestromung der Statorleiter 309 der Spulengruppen lassen sich Statormagnetfelder erzeugen. Mittels einer magnetischen Kopplung zwischen den Statormagnetfeldern und einem Läufermagnetfeld des Läufers 400 ist der Läufer 400 zumindest entlang der X-Richtung, der Y-Richtung oder einer kombinierten XY-Richtung schwebend über die Statoroberfläche 303 verfahrbar. Ein Bewegen des Läufers 400 ist ferner in einer zur X-Richtung und zur Y-Richtung senkrecht orientierten Z-Richtung möglich. Auf diese Weise kann der Abstand des Läufers 400 zu der Statorfläche 303 variiert, der Läufer 400 also über der Statorfläche 303 angehoben oder abgesenkt werden.

Die Statormodule 301 weisen jeweils ein Statormodulgehäuse 305 auf, in dem eine Steuerelektronik (nicht gezeigt) zum Ansteuern des Statormoduls 301 angeordnet ist. Ferner sind im Statormodulgehäuse 305 Magnetfeldsensoren (nicht gezeigt) zum Detektieren des Läufermagnetfelds des Läufers 400 angeordnet. Zur Leistungs- und Datenversorgung der Steuerelektronik weist jedes Statormodul 301 entsprechende Anschlussleitungen 307 auf.

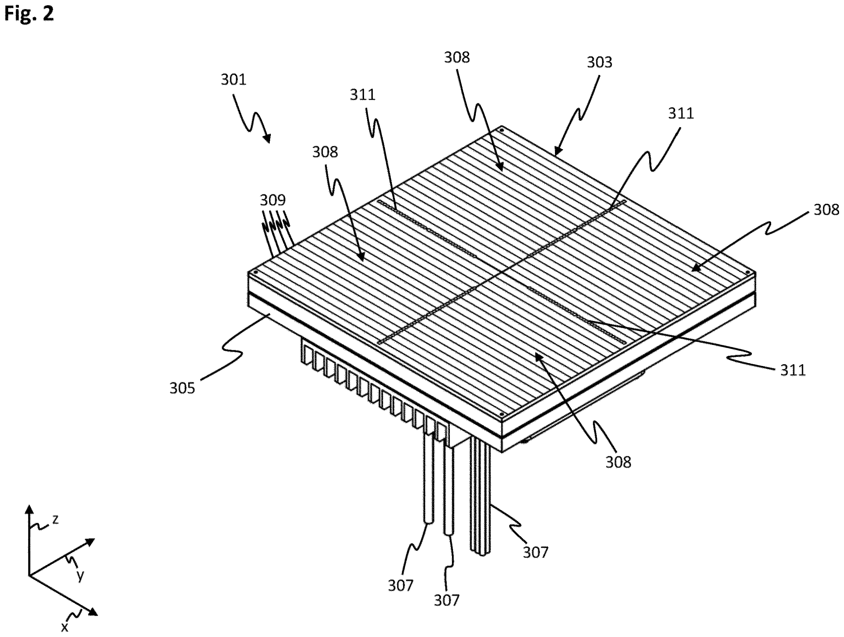

Fig. 2 zeigt eine schematische Ansicht eines Statormoduls 301 der Statoreinheit 300 aus Fig. 1.

Das Statormodul 301 umfasst vier Statorsegmente 308 mit entlang der X-Richtung orientierten Statorleitern 309 auf. Die Statorleiter 309 können voneinander elektrisch isoliert angeordnet sein. Die vier Statorsegmente 308 sind quadratisch ausgebildet und bilden eine quadratische Statoroberfläche 303. Die Statorsegmente 308 sind durch eine Kontaktstruktur 311 separiert, die eine Verbindung der Statorleiter 309 mit der Ansteuerelektronik und einen kompakten Aufbau der Statoreinheit 300 ermöglicht.

Fig. 3 zeigt eine schematische Darstellung einer Unterseite eines Läufers 400 aus Fig. 1 gemäß einer Ausführungsform.

Im Betrieb des Planarantriebssystems 200 ist die Unterseite des Läufers 400 der Statoroberfläche 303 der Statoreinheit 300 zugewandt angeordnet. Der Läufer 400 weist an der Unterseite eine Magnetanordnung 401 mit vier Magneteinheiten 407, also einer ersten X-Magneteinheit 411, einer zweiten X-Magneteinheit 413, einer ersten Y-Magneteinheit 415 und einer zweiten Y-Magneteinheit 417 auf. Jede Magneteinheit 407 weist wiederum eine Mehrzahl von Magnetelementen 409 auf. In der gezeigten Ausführungsform weist jede Magneteinheit 407 fünf Magnetelemente 409 auf, die als rechteckig längsgestreckte Elemente ausgebildet sind. Beispielhaft können die Magneteinheiten 407 jeweils als Halbach-Array-Magneteinheit ausgebildet sein. Die Magnetanordnung 401 ist ausgebildet das Läufermagnetfeld des Läufers 400 zu generieren, über das eine magnetische Kopplung mit den Statormagnetfeldern der Statoreinheit 300 erreichbar ist. Über die magnetische Kopplung kann eine Steuerung bzw. ein Verfahren des Läufers 400 relativ zur Statoreinheit 300 erreicht werden.

In der gezeigten Ausführungsform sind die erste X-Magneteinheit 411 und die zweite X-Magneteinheit 413 jeweils parallel zu einer X-Richtung des Läufers 400 orientiert während die erste Y-Magneteinheit 415 und die zweite Y-Magneteinheit 417 entlang einer Y-Richtung orientiert sind. Die ersten und zweiten X-Magneteinheiten 411, 413 dienen im Betrieb einem Antrieb des Läufers 400 entlang der Y-Richtung des Läufers 400, und die ersten und zweiten Y-Magneteinheit 415, 417 dienen im Betrieb einem Antrieb des Läufers 400 in X-Richtung. Darüber hinaus dienen die Magneteinheiten 407 einem Antrieb in eine zur X-Richtung und zur Y-Richtung senkrecht orientierten Z-Richtung.

In der Mitte der Magnetanordnung 401 kann der Läufer 400 eine Freifläche 403 aufweisen, die nicht von Magneten der Magnetanordnung 401 bedeckt wird. Im Bereich der Freifläche 403 kann der Läufer 400 eine Befestigungsstruktur 405 aufweisen.

Fig. 4 zeigt eine schematische Explosionsdarstellung eines Statorsegments 308 der Statoreinheit 300 und einer Magnetanordnung 401 des Läufers 400 aus Fig. 1. Fig. 4 zeigt eine perspektivische Draufsicht auf den Läufer 400 in einer in Bezug auf die Darstellung in Fig. 3 um 90° entgegen des Uhrzeigersinns um die Z-Achse gedrehten Ansicht.

In Fig. 4 sind vier voneinander getrennte Statorlagen dargestellt, die jeweils Bestandteil des Statorsegments 308 sind.

Gemäß der gezeigten Ausgestaltung weist das Statorsgment 308 in Z-Richtung übereinander angeordnet eine erste Statorlage 313, eine zweite Statorlage 315, eine dritte Statorlage 317 und eine vierte Statorlage 319 auf. Die erste Statorlage 313 umfasst ausschließlich Statorleiter 309, die sich in X-Richtung erstrecken und in Y-Richtung nebeneinander angeordnet sind. Die Statorleiter 309 der ersten Statorlage 313 entsprechen den in den Fig. 1 und Fig. 2 gezeigten Statorleitern 309, die an der Statoroberfläche 303 angeordnet sind. Die Statorleiter 309 der weiteren Statorlagen sind in Z-Richtung unterhalb der ersten Statorlage 313 angeordnet und somit in Fig. 1 und Fig. 2 nicht dargestellt.

Die zweite Statorlage 315 umfasst zu den Statorleitern 309 der ersten Statorlage 313 senkrecht angeordnete Statorleiter, die sich in Y-Richtung erstrecken und in X-Richtung nebeneinander angeordnet sind.

In den dritten und vierten Statorlagen 317, 319 wiederholen sich die ersten und zweiten Statorlagen 313, 315, sodass in den vier Statorlagen des gezeigten Statorsegments 308 abwechselnd in X-Richtung und in Y-Richtung erstreckende Statorleiter angeordnet sind. Die Ausbildung des Statorsegments 308 ist beispielhaft für die in den Fig. 1 und Fig. 2 gezeigten Statorsegmente 308, die ebenfalls die in Fig. 4 gezeigte Ausbildung aufweisen. Alternativ zu der in Fig. 4 gezeigten Ausführungsform kann ein Statorsegment 308 auch mehr als vier Statorlagen umfassen.

Die Statorleiter 309 der einzelnen ersten bis vierten Statorlagen 313, 315, 317, 319 sind jeweils zu Spulengruppen 321 zusammengefasst. Jede Statorlage 313, 315, 317, 319 umfasst in der gezeigten Ausführungsform drei nebeneinander angeordnete Spulengruppen 321. Die erste und dritte Statorlage 313, 317 weisen jeweils drei entlang der X-Richtung orientierte X-Spulengruppen 323 auf, die in Y-Richtung nebeneinander angeordnet sind. Die zweite und vierte Statorlage 315, 319 weisen jeweils drei entlang der Y-Richtung orientierte Y-Spulengruppen 325 auf, die in X-Richtung nebeneinander angeordnet sind. Jedes Statorsegment 308 weist somit eine Mehrzahl von X-Spulengruppen 323 und Y-Spulengruppen 325 auf. Die sechs Statorleiter 309 in jeder Spulengruppe 321 sind insbesondere als ein Drei-Phasen-System zusammengefasst, bei dem jeweils zwei miteinander verbundene Statorleiter 309 eine der drei Phasen U, V, W des Drei-Phasen-Systems bilden. Durch eine entsprechende Bestromung der Spulengruppen 321, und insbesondere der Drei-Phasen-Systeme der Spulengruppen 321, der einzelnen Statorlagen der Statorsegmente 308 lassen sich Statormagnetfelder der Statoreinheit 300 in Form von magnetischen Wanderfeldern erzeugen, mittels denen eine magnetische Kraft auf den Läufer 400 und damit verbunden eine Bewegung des Läufers 400 erreicht werden kann. Alternativ können auch Spulengruppen 321 mehrerer Statorlagen zusammengeschaltet sein, sodass übereinander angeordnete X-Spulengruppen 323 oder übereinander angeordnete Y-Spulengruppen 325 jeweils ein gemeinsames Drei-Phasen-System bilden.

Durch eine entsprechende Bestromung sind die X-Spulengruppen 323 eingerichtet, ein Statormagnetfeld mit einer Z-Komponente und einer Y-Komponente zu generieren. Die Y-Spulengruppen 325 hingegen sind eingerichtet, ein Statormagnetfeld mit einer Z-Komponente und einer X-Komponente zu generieren. Über die Z-Komponente des Statormagnetfelds lässt sich eine Bewegung des Läufers 400 in Z-Richtung des Statoreinheit 300 und insbesondere ein Schweben des Läufers 400 oberhalb der Statoroberfläche 303 der Statoreinheit 300 erreichen. Über die X- bzw. Y-Komponenten des Statormagnetfelds lassen sich hingegen Bewegungen des Läufers 400 in X- bzw. Y-Richtung relativ zur Statoreinheit 300 erreichen.

Die Bewegung des Läufers 400 durch die Statormagnetfelder der einzelnen Spulengruppen 321 der Statoreinheit 300 werden über eine magnetische Kopplung des Statormagnetfelds bzw. der Statormagnetfelder mit dem Läufermagnetfeld des Läufers 400 erreicht. Das Läufermagnetfeld wird hierbei über die X- und Y-Magneteinheiten des Läufers 400 erzeugt.

Die ersten und zweiten X-Magneteinheiten 411, 413 des Läufers 400 sind hierbei derart eingerichtet, dass diese ein Läufermagnetfeld mit einer Z-Komponente und einer Y-Komponente generieren. Die ersten und zweiten Y-Magneteinheiten 415, 417 sind hingegen eingerichtet, ein Läufermagnetfeld mit einer Z-Komponente und einer X-Komponente zu generieren. Die Z-Komponente ist hierbei entlang der Z-Richtung und die X- bzw. Y-Komponenten sind entlang der X- bzw. Y-Richtungen des Läufers orientiert.

Über die magnetische Kopplung der Z-Komponenten des Läufermagnetfelds und des Statormagnetfelds kann eine Bewegung des Läufers in Z-Richtung der Statoreinheit 300 erreicht werden, wenn der Läufer 400 gemäß Fig. 1 auf der Statoreinheit 300 platziert ist.

Über eine magnetische Kopplung der X-Komponenten des Läufermagnetfelds und des Statormagnetfelds lässt sich eine Bewegung des Läufers in X-Richtung realisieren, wenn der Läufer 400 derart auf der Statoreinheit 300 platziert ist, dass die X-Richtung der Statoreinheit 300 und die X-Richtung des Läufers 400 parallel angeordnet sind. Über eine magnetische Kopplung der Y-Komponenten des Läufermagnetfelds und des Statormagnetfelds lässt sich hingegen eine Bewegung des Läufers 400 in Y-Richtung realisieren.

Im Betrieb des Planarantriebssystems 100 kann der Läufer 400 derart über der Statoreinheit 300 ausgerichtet sein, dass die X-Magneteinheiten 411, 413 parallel zu den X-Spulengruppen 323 und die Y-Magneteinheiten 415, 417 parallel zu den Y-Spulengruppen 325 angeordnet sind. Eine derartige Ausrichtung des Läufers 400 ist in Fig. 4 gezeigt, in der entsprechenden Orientierung der Magnetanordnung 401 eines Läufers 400 zu den Spulengruppen 321 der oben beschriebenen Statorlagen angedeutet ist.

In der gezeigten Ausrichtung des Läufers 400 zu den Statorsegmenten 308 der Statoreinheit 300 kann über eine Bestromung der X-Spulengruppen 323 der jeweiligen Statorsegmente 308 ein Verfahren des Läufers 400 in Y-Richtung der Statoreinheit 300 erreicht werden, während ein Verfahren des Läufers 400 in X-Richtung über eine entsprechende Bestromung der Y-Spulengruppen 325 zu erreichen ist. Über entsprechende Bestromungen der X- bzw. Y-Spulengruppen 323, 325 kann ein Verfahren des Läufers 400 in eine beliebige Richtung relativ zur Statoreinheit 300 erreicht werden. Bei gemeinsamer Bestromung von X- und Y-Spulengruppen 323, 325 kann insbesondere eine zu den X- und Y-Richtungen diagonal ausgerichtete Bewegung des Läufers 400 erreicht werden.

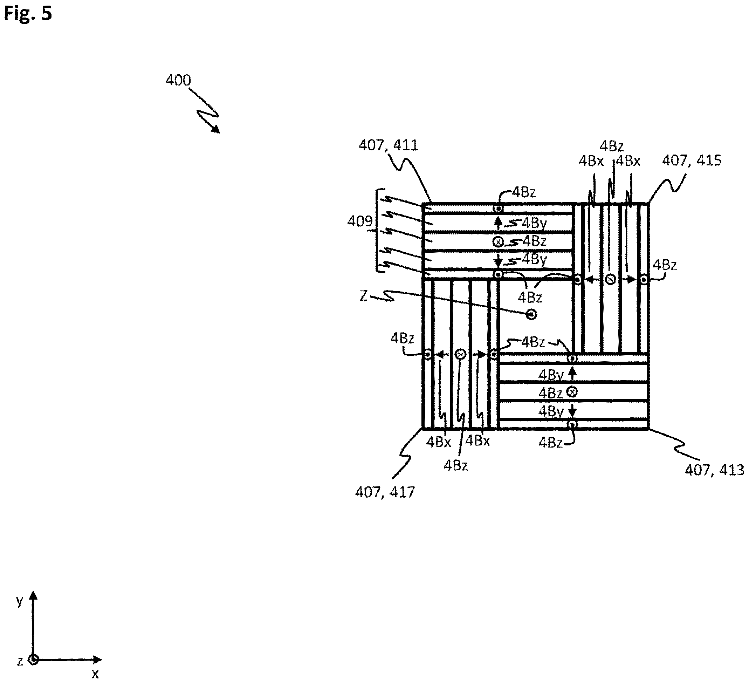

Fig. 5 zeigt eine schematische Darstellung des Läufers 400 aus Fig. 1 in Draufsicht, wobei vom Läufer 400 ausschließlich die Magnetanordnung 401 mit einer ersten X-Magneteinheit 411, einer zweiten X-Magneteinheit 413, einer ersten Y-Magneteinheit 415 und einer zweiten Y-Magneteinheit 417 gezeigt ist. Die Draufsicht gemäß Fig. 5 zeigt den Läufer 400 in einer in Bezug auf die Darstellung in Fig. 4 um 90° entgegen des Uhrzeigersinns um die Z-Achse gedrehten Ansicht.

Jede Magneteinheit 407 umfasst fünf nebeneinander angeordnete Magnetelemente 409, die sich für X-Magneteinheiten 411, 413 entlang einer X-Richtung des Läufers und für Y-Magneteinheiten 415, 417 entlang einer Y-Richtung des Läufers 400 erstrecken. Die Magnetelemente 409 der X-Magneteinheiten 411, 413 sind hierbei eingerichtet, ein Läufermagnetfeld mit einer Z-Komponente 4BZ und einer Y-Komponente 4BY generieren. Aufgrund der Anordnung der Y-Magneteinheiten 415, 417 senkrecht zu den X-Magneteinheiten 411, 413, sind die Y-Magneteinheiten 415, 417 eingerichtet, ein Läufermagnetfeld mit einer Z-Komponente 4BZ und einer X-Komponente 4BX zu erzeugen.

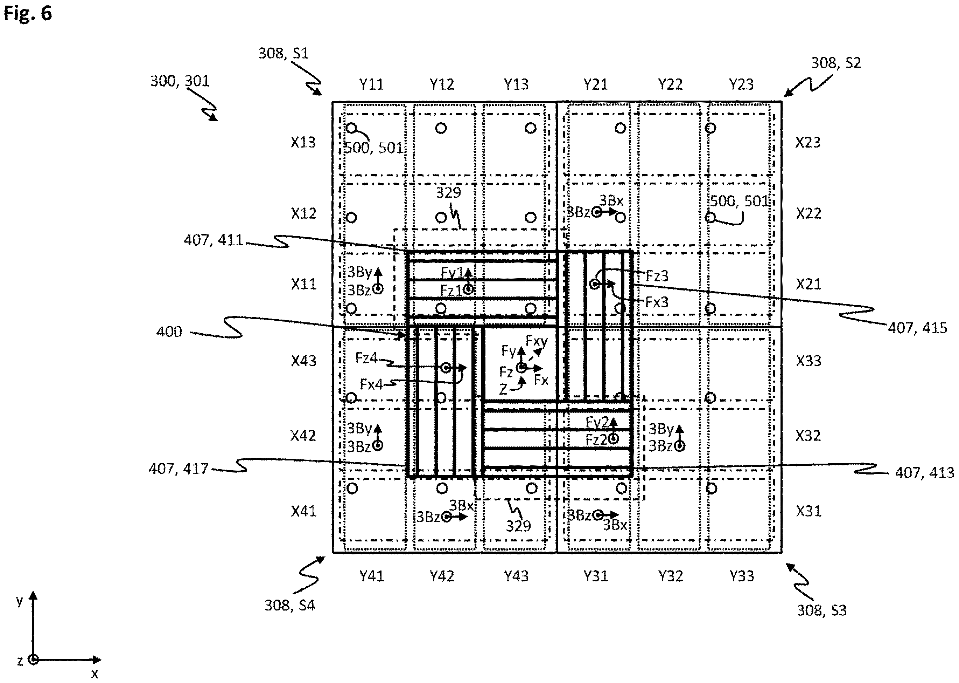

Fig. 6 zeigt eine schematische Darstellung des Läufers 400 aus Fig. 5 auf der Statoreinheit 300 in einer nicht rotierten Orientierung.

Fig. 6 zeigt eine schematische Draufsicht auf ein Statormodul 301 einer Statoreinheit 300, wobei von der Statoreinheit 300 ausschließlich vier quadratisch angeordnete Statorsegmente 308, ein erstes Statorsegment S1, ein zweites Statorsegment S2, ein drittes Statorsegment S3 und ein viertes Statorsegment S4 dargestellt sind. Zusätzlich zeigt die Fig. 6 den Läufer 400 aus Fig. 5, der auf der Statoreinheit 300 angeordnet ist, wobei vom Läufer 400 wieder ausschließlich die Magnetanordnung 401 gezeigt ist.

In Fig. 6 wird beispielhaft die Einwirkung der Statormagnetfelder der einzelnen bestromten Spulengruppen auf die Läufermagnetfelder der einzelnen Magneteinheiten 407 für eine lineare Translationsbewegung entlang der X- bzw. Y-Richtungen der Statoreinheit 300 illustriert.

In Fig. 6 sind für jedes Statorsegment 308 zwei in Z-Richtung übereinander angeordnete Statorlagen analog zu dem in Fig. 4 Gezeigten dargestellt. Jede Statorlage umfasst drei Spulengruppen 321, die über die gesamte Länge bzw. Breite des Statorsegments 308 erstreckt sind. Eine Statorlage umfasst hierbei analog zu Fig. 4 drei X-Spulengruppen 323 oder drei Y-Spulengruppen 325.

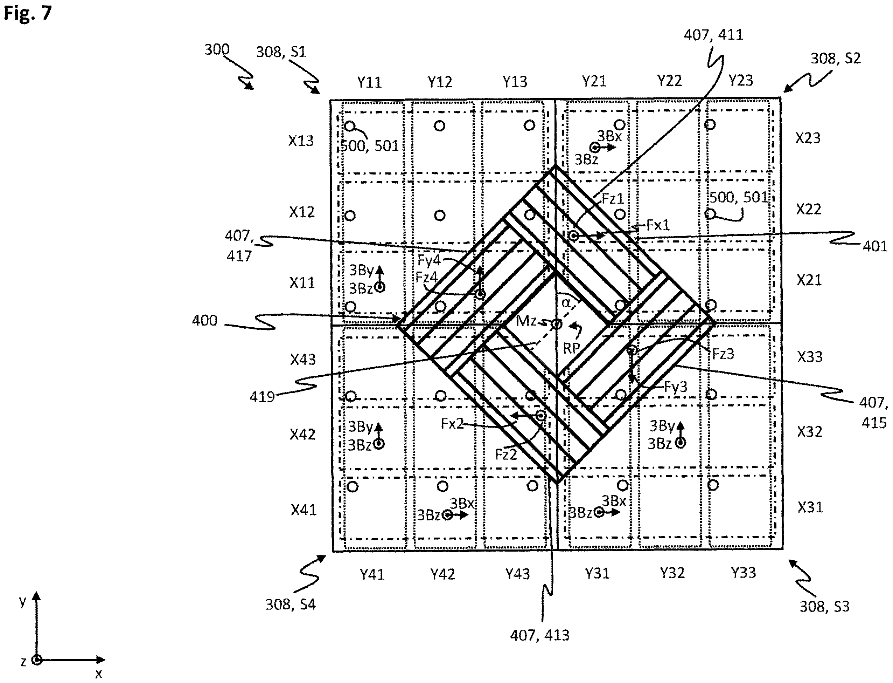

In der gezeigten Ausführungsform umfasst das erste Statorsegment S1 eine erste X-Spulengruppe X11, eine zweite X-Spulengruppe X12, eine dritte X-Spulengruppe X13, eine erste Y-Spulengruppe Y11, eine zweite Y-Spulengruppe Y12 und eine dritte Y-Spulengruppe Y13. Analog umfasst das zweite Statorsegment S2 eine erste X-Spulengruppe X21, eine zweite X-Spulengruppe X22, eine dritte X-Spulengruppe X23, eine erste Y-Spulengruppe Y21, eine zweite Y-Spulengruppe Y22 und eine dritte Y-Spulengruppe Y23. Das dritte Statorsegment S3 umfasst ebenfalls eine erste X-Spulengruppe X31, eine zweite X-Spulengruppe X32, eine dritte X-Spulengruppe X33, eine erste Y-Spulengruppe Y31, eine zweite Y-Spulengruppe Y32 und eine dritte Y-Spulengruppe Y33. Das vierte Statorsegment S4 umfasst analog eine erste X-Spulengruppe X41, eine zweite X-Spulengruppe X42, eine dritte X-Spulengruppe X43, eine erste Y-Spulengruppe Y41, eine zweite Y-Spulengruppe Y42 und eine dritte Y-Spulengruppe Y43. Zur Illustration der Lage und Ausrichtung der einzelnen X-Spulengruppen 323 sind diese in Fig. 6 und Fig. 7 als Strich-Punkt-Linie dargestellt. Zur Illustration der Lage und Ausrichtung der einzelnen Y-Spulengruppen 325 sind diese in Fig. 6 und Fig. 7 als Punkt-Linie dargestellt.

Die erste X-Spulengruppe X11 des ersten Statorsegments S1 ist auf einer Linie mit der ersten X-Spulengruppe X21 des zweiten Statorsegments S2 angeordnet. Beide X-Spulengruppen 323 sind jedoch getrennte Spulengruppen 321 und separat voneinander ansteuerbar. Gleiches gilt für die zweite X-Spulengruppe X12 des ersten Statorsegments S1 und die zweite X-Spulengruppe X22 des zweiten Statorsegments S2 und die die dritte X-Spulengruppe X13 des ersten Statorsegments S1 und die dritte X-Spulengruppe X23 des zweiten Statorsegments S2, die ebenfalls unabhängig voneinander ansteuerbar sind.

Gleiches gilt für die X-Spulengruppen 323 des vierten Statorsegments S4 und die X-Spulengruppen 323 des dritten Statorsegments S3, die ebenfalls separat ansteuerbar sind.

Analog sind die Y-Spulengruppen 325 des ersten Statorsegments S1 und die Y-Spulengruppen 325 des vierten Statorsegment S4 separat ansteuerbar.

Ebenfalls separat ansteuerbar sind die die Y-Spulengruppen 325 des zweiten Statorsegments S2 und die Y-Spulengruppen 325 des dritten Statorsegment S3.

Analog dem oben Beschriebenen, sind die X-Spulengruppen 323 eingerichtet, ein Statormagnetfeld mit einer Z-Komponente 3Bz und einer Y-Komponente 3By zu erzeugen. Die Y-Spulengruppen 325 sind hingegen eingerichtet, ein Statormagnetfeld mit einer Z-Komponente 3Bz und einer X-Komponente 3Bx zu erzeugen. In Fig. 6 sind lediglich für ausgewählte Spulengruppen 321, die in dem illustrierten Beispiel zum Verfahren des Läufers 400 bestromt werden, entsprechende Magnetfeldkomponenten dargestellt.

In der gezeigten Ausführungsform ist der Läufer 400 derart auf der Statoreinheit 300 angeordnet, dass eine parallele Anordnung der X-Magneteinheiten 411, 413 zu den X-Spulengruppen 323 und eine parallele Anordnung der Y-Magneteinheiten 415, 417 zu den Y-Spulengruppen 325 der einzelnen Statorsegmente 308 der Statoreinheit 300 erreicht ist.

Durch die parallele Ausrichtung der X-Magneteinheiten 411, 413 zu den X-Spulengruppen 323 kann über die Bestromung der entsprechenden X-Spulengruppen 323 und das dadurch erzeugte Statormagnetfeld mit Z-Komponente 3Bz und Y-Komponente 3By eine Bewegung des Läufers 400 in Z-Richtung bzw. eine Bewegung des Läufers 400 in Y-Richtung erreicht werden. Durch die parallele Anordnung der Y-Magneteinheiten 415, 417 zu den Y-Spulengruppen 325 und durch entsprechendes Bestromen der jeweiligen Y-Spulengruppen 325 und das generierte Statormagnetfeld mit Z-Komponente 3Bz und X-Komponente 3Bx kann eine Bewegung des Läufers 400 in Z-Richtung wie in X-Richtung erreicht werden. Durch eine kombinierte Bestromung von X- und Y-Spulengruppen 323, 325 kann darüber hinaus eine diagonal gerichtete Bewegung des Läufers 400 erreicht werden.

In der gezeigten Ausführungsform in Fig. 6 wird beispielhaft für eine derartige translatorische Bewegung des Läufers die erste X-Spulengruppe X11 des ersten Statorsegments S1 bestromt. Durch das hierdurch erzeugte Statormagnetfeld mit Z-Komponente 3Bz und Y-Komponente 3By wirkt eine magnetische Kraft Fz1 in Z-Richtung und eine magnetische Kraft Fy1 in Y-Richtung auf die über der ersten X-Spulengruppe X11 angeordnete erste Magneteinheit 411 ein. Ferner wird die zweite X-Spulengruppe X32 des dritten Statorsegments S3 bestromt, sodass durch das entsprechend generierte Statormagnetfeld mit Z-Komponente 3Bz und Y-Komponente 3By auf die über der zweiten X-Spulengruppe X32 angeordnete zweite X-Magneteinheit 413 eine magnetische Kraft in Z-Richtung Fz2 und eine magnetische Kraft in Y-Richtung Fy2 einwirkt. Da die zweite Magneteinheit 413 in der gezeigten Positionierung des Läufers auf der Statoreinheit 300 ebenfalls die zweite X-Spulengruppe X42 des vierten Statorsegments S4 überdeckt, wird diese ebenfalls angesteuert, sodass das hierdurch erzeugte Statormagnetfeld mit Z-Komponente 3Bz und Y-Komponente 3By zu der auf die zweite X-Magneteinheit 413 einwirkenden magnetischen Kraft in Z-Richtung Fz2 und in Y-Richtung Fy2 beigetragen wird. Durch die auf die ersten und zweiten Magneteinheiten 411, 413 einwirkenden Kräfte in Z- bzw. Y-Richtung wird eine Bewegung des Läufers in Z- bzw. Y-Richtung bewirkt.

In der gezeigten beispielhaften Illustration wird ferner die erste Y-Spulengruppe Y21 des zweiten Statorsegments S2 angesteuert und hierdurch ein Statormagnetfeld mit Z-Komponente 3Bz und X-Komponente 3Bx generiert. Ferner wird die erste Y-Spulengruppe Y31 des dritten Statorsegments S3 bestromt, wodurch ebenfalls ein Statormagnetfeld mit Z-Komponente 3Bz und X-Komponente 3Bx generiert wird. Die Statormagnetfelder der beiden ersten Y-Spulengruppen Y21, Y31 bewirken eine auf die erste Y-Magneteinheit 415 einwirkende magnetische Kraft in Z-Richtung Fz3 und in X-Richtung Fx3. Ferner wird die zweite Y-Spulengruppe Y42 des vierten Statorsegments S4 bestromt und somit ein Statormagnetfeld mit Z-Komponente 3Bz und X-Komponente 3Bx erzeugt, sodass auf die oberhalb der zweiten Y-Spulengruppe Y42 angeordnete zweite Y-Magneteinheit 417 eine magnetische Kraft in Z-Richtung Fz4 und in X-Richtung Fx4 einwirkt. Durch die Bestromung der ersten Y-Spulengruppen Y21, Y31 und der zweiten Y-Spulengruppe Y42 und die dadurch auf die ersten und zweiten Y-Magneteinheiten 415, 417 einwirkenden magnetischen Kräfte in Z-Richtung Fz3, Fz4 und X-Richtung Fx3, Fx4 wird eine Bewegung des Läufers in Z-Richtung bzw. X-Richtung bewirkt.

Bei gleichzeitiger Bestromung der X-Spulengruppen X11, X32, X42 und der Y-Spulengruppen Y21, Y31 und Y42 kann eine diagonale XY-Bewegung des Läufers 400 erreicht werden.

Durch die Gesamtheit der auf die einzelnen Magneteinheiten 407 einwirkenden magnetischen Kräfte Fz1, Fz2, Fz3, Fz4, Fy1, Fy2, Fx3, Fx4 entstehen resultierende Kräfte Fx, Fy, Fz, die auf einem Zentrum Z des Läufers 400 einwirken.

In Fig. 6 sind ferner mittels gestrichelter Linien zwei Überdeckungsbereiche 329 dargestellt, die jeweils über den beiden X-Magneteinheiten 411, 413 angeordnet sind. Über die Überdeckungsbereiche 329 kann eine Auswahl der zu bestromenden Spulengruppen 321 vorgenommen werden, indem zur Einwirkung auf die jeweiligen Magneteinheiten 407 die Spulengruppen 321 zur Bestromung ausgewählt werden, die wenigstens teilweise in dem Überdeckungsbereich 329 angeordnet sind. Der Überdeckungsbereich 329 beschreibt hierbei einen Bereich der Statoreinheit 300, der von der jeweiligen Magneteinheit 407 überdeckt wird. Aus Übersichtlichkeitsgründen sind in Fig. 6 ausschließlich die Überdeckungsbereiche 329 der X-Magneteinheiten 411, 413 dargestellt. Analog zu den dargestellten Überdeckungsbereichen 329 weisen die Y-Magneteinheiten 415, 417 jedoch ebenfalls Überdeckungsbereiche auf, mittels denen die von den Y-Magneteinheiten 415, 417 überdeckten Spulengruppen 321 zur Bestromung ermittelt werden können.

In der gezeigten Ausführungsform weist die Statoreinheit 300 ferner ein Sensormodul 500 mit einer Mehrzahl von Magnetfeldsensoren 501 auf. Die Magnetfeldsensoren 501 können beispielsweise als Hall-Sensoren, und insbesondere als 1D-, 2D- oder 3D-Hall-Sensoren ausgebildet sein. Zur Bestimmung der zu bestromenden Spulengruppen 321 mittels der Überdeckungsbereiche 329 können über die Magnetfeldsensoren 501 die Statormagnetfelder der Magneteinheiten 407 detektiert werden. Über die Detektion der Läufermagnetfelder der einzelnen Magneteinheiten 407 können diese relativ zu den jeweiligen Magnetfeldsensoren 501 und damit zur Statoreinheit 300 detektiert und verortet werden. Basierend auf dieser Verortung können die in Form und Größe vordefinierbaren Überdeckungsbereiche 329 ermittelt werden und relativ zu der Statoreinheit 300 positioniert werden. Die in den derart positionierten Überdeckungsbereichen 329 wenigstens teilweise angeordneten Spulengruppen 321 können somit als durch die jeweiligen Magneteinheiten 407 überdeckte Spulengruppen 321 identifiziert und für die Bestromung bestimmt werden.

Zum Bewegen des Läufers 400 in X-, Y- oder Z-Richtung relativ zur Statoreinheit 300 bedarf es einer auf das Zentrum Z des Läufers 400 einwirkenden Kraft Fx, Fy, Fz in die entsprechende Richtung, die eine entsprechende Bewegung des Läufers 400 bewirken kann. Durch die Ansteuerung der einzelnen Spulengruppen 321 und das Einwirken der magnetischen Kräfte auf die vier Magneteinheiten 407 ergibt sich die auf das Zentrum Z des Läufers einwirkende resultierende Kraft Fx, Fy, Fz aus der Gesamtheit der auf die vier Magneteinheiten 407 einwirkenden magnetischen Kräfte, die über die Kopplung der durch die Bestromung der einzelnen Spulengruppen erzeugten Statormagnetfelder generiert sind.

Für eine Rotation des Läufers 400 um eine der Richtungen des durch die Statoreinheit 300 aufgespannten Koordinatensystems benötigt es entsprechende auf das Zentrum Z des Läufers einwirkende Drehmomente Mx, My, Mz. Die genannten Drehmomente ergeben sich ebenfalls durch eine Gesamtheit der auf die vier Magneteinheiten 407 einwirkenden magnetischen Kräfte.

$$
\begin{pmatrix} F_x \\ F_y \\ F_z \\ M_x \\ M_y \\ M_z \end{pmatrix} \sim \begin{pmatrix} F_{y1} \\ F_{z1} \\ F_{y2} \\ F_{z2} \\ F_{x3} \\ F_{z3} \\ F_{x4} \\ F_{z4} \end{pmatrix}
$$

In der gezeigten Gleichung wird eine Relation zwischen den auf das Zentrum des Läufers einwirkenden Gesamtkräfte Fx, Fy, Fz bzw. Drehmomente Mx, My, Mz und den auf die einzelnen Magneteinheiten 407 einwirkenden magnetischen Kräfte Fy1, Fy2, Fx3, Fx4, Fz1, Fz2, Fz3, Fz4 beispielhaft dargestellt. Die tatsächliche Relation zwischen den auf die einzelnen Magneteinheiten 407 einwirkenden magnetischen Kräfte Fy1, Fy2, Fx3, Fx4, Fz1, Fz2, Fz3, Fz4 und den daraus resultierenden Kräfte Fx, Fy, Fz und Drehmomente Mx, My, Mz, die auf das Zentrum des Läufers 400 wirken, kann von der tatsächlichen Ausgestaltung des Läufers 400, wie Form, Größe und Gewicht, wie von der Ausgestaltung der Magneteinheiten 407 abhängen.

Die einzelnen auf die verschiedenen Magneteinheiten 407 einwirkenden magnetischen Kräfte hängen direkt von den bestromten Spulengruppen 321 ab. In der in Fig. 6 gezeigten Ausführungsform, in der eine diagonale Bewegung des Läufers in XY-Richtung dargestellt ist, werden zum Erzeugen der auf die Magneteinheiten 407 einwirkenden magnetischen Kräfte die Spulengruppen X11, Y21, X32, Y31, X42 und Y42 entsprechend bestromt. Dies kann gemäß einer Relation zwischen Bestromung der jeweiligen Spulengruppe 321 und auf eine der Magneteinheiten 407 einwirkenden magnetischen Kraft gemäß der folgenden Gleichung dargestellt werden.

$$
\begin{pmatrix} F_x \\ F_y \\ F_z \\ M_x \\ M_y \\ M_z \end{pmatrix} \sim \begin{pmatrix} F_{y1} \\ F_{z1} \\ F_{x2} \\ F_{z2} \\ F_{y3} \\ F_{z3} \\ F_{x4} \\ F_{z4} \end{pmatrix} \sim \begin{pmatrix} I_{qX11} \\ I_{dX11} \\ I_{qX32} \\ I_{dY32} \\ I_{qY21} \\ I_{dY21} \\ I_{qY42} \\ I_{dY42} \end{pmatrix}
$$

Die Bestromung der einzelnen Spulengruppen ist hierbei als d-q-Strom dargestellt, wie dies für Drei-Phasen-Systeme üblich ist. Die Bestromungswerte $I_{qX,Y}$ und $I_{dX,Y}$ beschreiben hierbei die q- und d-Anteile des Erregerstroms der jeweils bestromten X- bzw. Y-Spulengruppen. In der gezeigten Gleichung beschreibt keine Relationsmatrix, die die Relation zwischen Bestromung der Spulengruppe 321 und der erzeugten magnetischen Kraft auf die jeweils die Spulengruppe 321 überdeckende Magneteinheit 407 darstellt. Die tatsächliche Relation hängt direkt von der jeweiligen Ausgestaltung der Spulengruppen 321 und Magneteinheiten 407 und gegebenenfalls von einer Orientierung beider zueinander ab und wird im Folgenden nicht detailliert beschrieben.

Die in den oben beschriebenen Gleichungen gezeigten Relationen können sowohl für eine translatorische als auch eine rotatorische Bewegung des Läufers 400 Verwendung finden.

Fig. 7 zeigt eine schematische Darstellung des Läufers 400 aus Fig. 5 auf der Statoreinheit 300 in einer rotierten Orientierung.

Fig. 7 zeigt den Läufer in Form der Magnetanordnung 401 und die Statoreinheit aus Fig. 6. Sofern die einzelnen Merkmale der Magnetanordnung 401 bzw. der Statoreinheit 300 in Fig. 7 unverändert bleiben, wird von einer erneuten detaillierten Beschreibung abgesehen.

In Fig. 7 ist der Läufer 400 in die Rotationsposition RP bewegt. In der Rotationsposition RP existiert für jede Orientierung des Läufers 400 relativ zur Statoreinheit 300 und für jede Magneteinheit 407 eine Spulengruppe 321 der Statoreinheit 300, die ausschließlich durch eine Magneteinheit 407 des Läufers 400 überdeckt wird.

In der gezeigten Ausführungsform in Fig. 7 ist die Rotationsposition RP durch den Berührungspunkt zwischen den ersten bis vierten Statorsegmenten S1, S2, S3, S4 gegeben, indem die vier Statorsegmente 308 aneinander angrenzen. Das können die vier Statorsegmente 308 eines einzelnen Statormoduls 301 sein. Bei einer Statoreinheit 300, die aus einer Mehrzahl an Statormodulen 301 besteht, können die einzelnen Statorsegmente 308 auch in verschiedenen aneinander angrenzenden Statormodulen angeordnet sein, wobei dann der Kreuzungspunkt der Statorsegmente 308 der aneinander angrenzenden Statormodule 301 der Statoreinheit 300 die Rotationsposition RP bildet.

In der gezeigten Ausführungsform ist darüber hinaus der Läufer 400 um 45° um die zur Z-Achse des durch die Statoreinheit 300 aufgespannten Koordinatensystems parallel orientierte Rotationsachse gedreht. Durch diese Orientierung des Läufers weisen die einzelnen Magneteinheiten 407 einen Winkel von 45° zu den X- bzw. Y-Spulengruppen 321, 325 der einzelnen Statorsegmente 308 auf und überdecken zumindest teilweise Spulengruppen wenigstens zweier aneinander angrenzender Statorsegmente 308. Darüber hinaus führt die Positionierung des Läufers 400 in der Rotationsposition RP dazu, dass die durch die einzelnen Magneteinheiten 407 exklusiv überdeckten Spulengruppen 321, die lediglich durch eine Magneteinheit 407 überdeckt werden, jeweils in verschiedenen Statorsegmenten 308 der Statoreinheit 300 angeordnet sind. Die Überdeckung einer Spulengruppe 321 durch eine Magnetanordnung 407 des Läufers 400 beschreibt in diesem Zusammenhang, dass die jeweilige Magnetanordnung 407 in der jeweiligen Orientierung des Läufers 400 wenigstens teilweise oberhalb der entsprechenden Spulengruppe 321 angeordnet ist.

So wird in der gezeigten Orientierung des Läufers 400 die zweite X-Spulengruppe X22 des zweiten Statorsegments S2 ausschließlich durch die erste X-Magneteinheit 411 überdeckt. Wie aus der Darstellung ersichtlich, ist in der gezeigten Orientierung lediglich die erste X-Magneteinheit 411 wenigstens teilweise oberhalb der zweiten Spulengruppe X22 des zweiten Statorsegments S2 angeordnet. Die zweite Y-Spulengruppe Y32 des dritten Statorsegments S3 wird ausschließlich durch die erste Y-Magneteinheit 415 überdeckt, da lediglich die erste Y-Magneteinheit 415 wenigstens teilweise oberhalb der zweite Y-Spulengruppe Y32 des dritten Statorsegments S3. Die zweite X-Spulengruppe X42 des vierten Statorsegments S4 wird ausschließlich durch die zweite X-Magneteinheit 413 überdeckt, die einzig wenigstens teilweise oberhalb der zweite X-Spulengruppe X42 des vierten Statorsegments S4. Die zweite Y-Spulengruppe Y12 des ersten Statorsegments S1 wird ausschließlich durch die zweite Y-Magneteinheit 417 überdeckt, die einzig wenigstens teilweise oberhalb der zweite Y-Spulengruppe Y12 des ersten Statorsegments S1.

Die hier angeführten, exklusiv durch nur eine Magneteinheit 407 überdeckten Spulengruppen 321 sind lediglich ein Beispiel für die in der Fig. 7 dargestellten Orientierung des Läufers 400. Für andere Orientierungen des Läufers 400 können durch die Magneteinheiten 407 andere Spulengruppen 321 exklusiv überdeckt werden, da im Zuge der Rotation des Läufers 400 um die zur Z-Richtung parallel orientierten Rotationsachse, die Magneteinheiten 407 oberhalb anderer Spulengruppen 321 angeordnet werden. Für jede Orientierung des Läufers 400 in der Rotationsposition RP existiert jedoch für jede Magneteinheit 407, eine Spulengruppe 321, über der ausschließlich eine Magneteinheit 407 wenigstens teilweise angeordnet ist, und die somit ausschließlich von dieser Magneteinheit überdeckt ist.

In der gezeigten Ausführungsform, in der die Rotationsposition RP durch den Berührungspunkt der vier Statorsegmente S1, S2, S3, S4 gebildet ist, sind die durch die vier Magneteinheiten 407 exklusiv überdeckten Spulengruppen 321 in den vier Statorsegmenten angeordnet, wobei in jedem Statorsegment genau eine exklusiv von einer Magneteinheit 407 überdeckte Spulengruppe 321 angeordnet ist, die von keiner weiteren Magneteinheit 407 überdeckt ist.

Durch die Orientierung des Läufers 400 weisen nicht nur die einzelnen Magneteinheiten 407 einen Winkel zu den X- bzw. Y-Spulengruppen 323, 325 auf, sondern auch die X- bzw. Y-Komponenten des Läufermagnetfelds 4Bx, 4By der jeweiligen Magneteinheiten 407 sind nicht mehr parallel oder senkrecht zu den X- bzw. Y-Komponenten des Statormagnetfelds 3Bx, 3By der einzelnen Spulengruppen 321 angeordnet, sondern weisen ebenfalls einen Winkel von 45° zu den Komponenten des Statormagnetfelds auf. Dies hat zur Folge, dass auf jede Magneteinheit 407 Statormagnetfelder sowohl von X-Spulengruppen 323 als auch von Y-Spulengruppen 325 der einzelnen Statorsegmente 308 einwirken können und zu einer entsprechenden magnetischen Kraft auf die jeweiligen Magneteinheiten 407 beitragen können.

Für eine weitere Rotation des Läufers 400 um die Rotationsachse können die durch die einzelnen Magneteinheiten 407 überdeckten Spulengruppen 321 derart bestromt werden, dass die auf die jeweiligen Magneteinheiten 407 einwirkenden magnetischen Kräfte in einer Gesamtheit zu einem Drehmoment MZ um die zur Z-Achse parallel orientierte Rotationsachse führen. In der gezeigten Ausführungsform werden hierzu die Spulengruppen 321 bestromt, die jeweils auf eine Magneteinheit 407 einwirken und eine entsprechende magnetische Kraft auf diese ausüben. Im Folgenden wird das Vorgehen beispielhaft für vier Spulengruppen 321 beschrieben.

In der gezeigten Ausführungsform wird beispielsweise die erste Y-Spulengruppe Y21 des zweiten Statorsegments S2 bestromt, wodurch diese ein Statormagnetfeld mit einer Z-Komponente 3Bz und einer X-Komponente 3Bx erzeugt. Über das erzeugte Statormagnetfeld wird somit durch die Bestromung der zweiten Y-Spulengruppe Y21 eine magnetische Kraft auf die erste X-Magneteinheit 411 mit einer Z-Komponente FZ1 und einer X-Komponente Fx1 erzeugt. Ferner wird die dritte X-Spulengruppe X33 des dritten Statorsegments S3 bestromt und ein entsprechendes Statormagnetfeld mit einer Z-Komponente 3Bz und einer Y-Komponente 3By generiert. Hierdurch wirkt auf die erste Y-Magneteinheit 415 eine magnetische Kraft mit einer Z-Komponente FZ3 und einer Y-Komponente Fy3 ein. Darüber hinaus wird die dritte Y-Spulengruppe Y43 des vierten Statorsegments S4 bestromt und hierdurch ein Statormagnetfeld mit Z-Komponente 3Bz und X-Komponente 3Bx erzeugt.

Hierüber wirkt auf die zweite X-Magneteinheit 413 eine magnetische Kraft mit Z-Komponente Fz2 und X-Komponente Fx2. Analog wird die erste X-Spulengruppe X11 des ersten Statorsegments S1 bestromt und ein entsprechendes Statormagnetfeld mit einer Z-Komponente 3Bz und einer Y-Komponente 3BY erzeugt. Hierüber wirkt eine magnetische Kraft auf die zweite Y-Magneteinheit 417 mit Z-Komponente Fz4 und Y-Komponente Fy4.

Zur angestrebten Rotation des Läufers 400, in der gezeigten Ausführungsform im Uhrzeigersinn, sind die X-Komponenten bzw. Y-Komponenten der vier Statormagnetfelder der vier bestromten Spulengruppen 321 jeweils entgegengesetzt gerichtet, sodass die X-Komponenten der auf die X-Magneteinheiten 411, 413 einwirkenden magnetischen Kräfte Fx1, Fx2 und die Y-Komponenten der auf die Y-Magneteinheiten 415, 417 einwirkenden magnetischen Kräfte Fy3, Fy4 jeweils entgegengesetzt gerichtet sind. Die Gesamtheit der vier auf die einzelnen Magneteinheiten 407 einwirkenden magnetischen Kräfte führen somit zu einem Drehmoment MZ um die zur Z-Achse parallel angeordnete Rotationsachse. Hierüber kann eine Rotation des Läufers um die Rotationsachse gemäß einem Drehwinkel $\alpha$ erzielt werden.

In Fig. 7 ist der Drehwinkel $\alpha$ durch einen Raumwinkel zwischen einer Vorzugsrichtung 419 des Läufers 400 und der Y-Richtung des Koordinatensystems der Statoreinheit 300 definiert.

In der gezeigten Ausführungsform werden lediglich vier Spulengruppen X11, Y21, X33 und Y43 bestromt. Alternativ hierzu kann zur Rotation des Läufers jedoch eine Mehrzahl von Spulengruppen 321 bestromt werden, die durch die Magneteinheiten 407 des Läufers überdeckt werden und somit auf die entsprechenden Magneteinheiten 407 einwirken können. In der gezeigten Orientierung können beispielsweise die ersten und zweiten X-Spulengruppen X11, X22 und die zweiten und dritten Y-Spulengruppen Y12, Y13 des ersten Statorsegments S1, die ersten und zweiten X-Spulengruppen X21, X22 und die ersten und zweiten Y-Spulengruppen Y21, Y22 des zweiten Statorsegments S2, die zweiten und dritten Y-Spulengruppen X32, X33 und die ersten und zweiten Y-Spulengruppen Y31, Y32 des dritten Statorsegments S3 und die zweiten und dritten X-Spulengruppen X42, X43 und die zweiten und dritten Y-Spulengruppen Y42, Y43 des vierten Statorsegments S4 bestromt werden. Die individuelle Bestromung der einzelnen genannten Spulengruppen 321 erfolgt derart, dass die Gesamtheit der auf die vier Magneteinheiten 407 einwirkenden magnetischen Kräfte zu dem benötigten Drehmoment MZ führen, das eine Rotation des Movers um den gewünschten Drehwinkel $\alpha$ ermöglicht.

Die Bestromung der genannten Spulengruppen 321 führt zu der folgenden Relation:

$$\begin{pmatrix} F_x \\ F_y \\ F_z \\ M_x \\ M_y \\ M_z \end{pmatrix} \sim \begin{pmatrix} F_{x1} \\ F_{z1} \\ F_{x2} \\ F_{z2} \\ F_{y3} \\ F_{z3} \\ F_{y4} \\ F_{z4} \end{pmatrix} \sim \begin{pmatrix} I_{qX11} \\ I_{dX11} \\ I_{qX12} \\ I_{dX12} \\ I_{qY12} \\ I_{dY12} \\ I_{qY13} \\ I_{dY13} \\ I_{qX21} \\ I_{dX21} \\ I_{qX22} \\ I_{dX22} \\ I_{qY21} \\ I_{dY21} \\ I_{qY22} \\ I_{dY22} \\ I_{qX32} \\ I_{dX32} \\ I_{qX33} \\ I_{dX33} \\ I_{qY31} \\ I_{dY31} \\ I_{qY32} \\ I_{dY32} \\ I_{qX42} \\ I_{dX42} \\ I_{qX43} \\ I_{dX43} \\ I_{qY42} \\ I_{dY42} \\ I_{qY43} \\ I_{dY43} \end{pmatrix}$$

In der gezeigten Relation ist analog zu dem zu Fig. 6 Beschriebenen eine Relation zwischen der individuellen Bestromung der 16 bestromten Spulengruppen 321 und den auf die die Spulengruppen 321 überdeckenden Magneteinheiten 407 einwirkenden magnetischen Kräfte Fx1, Fx2, Fy3, Fy4, Fz1, Fz2, Fz3, Fz4 dargestellt. Bei Ansteuerung der oben genannten 16 Spulengruppen 321, von denen jeweils pro Statorsegment zwei X-Spulengruppen 323 und zwei Y-Spulengruppen 325 angesteuert werden, ergeben sich in der d-q-Darstellung 32 Stromwerte, die gemäß der gezeigten Relation zu den auf die Magneteinheiten 407 einwirkenden magnetischen Kräften führen.

Die zur Erzeugung der auf die einzelnen Magneteinheiten 407 einwirkenden magnetischen Kräfte, die wiederum zu den zur Rotation benötigten Drehmomenten MZ führen, benötigten 32 Bestromungswerte können berechnet oder mittels einer entsprechenden Simulation erstellt werden.

Mittels einer Simulation können beispielsweise für verschiedene Drehwinkel α und die dazu benötigten Drehmomente MZ entsprechende Bestromungswerte der einzelnen durch die Magneteinheiten 407 überdeckten Spulengruppen 321 direkt oder indirekt erzeugt werden. Die ermittelten Werte können beispielsweise in einer entsprechenden Datenbank bzw. Look-up-Tabelle gespeichert sein, sodass diese zur Steuerung des Läufers 400 und insbesondere zur Ausführung einer entsprechenden Rotation des Läufers 400 um den gewünschten Drehwinkel α aus der Datenbank bzw. der Look-up-Tabelle ausgelesen werden können.

Fig. 8 zeigt ein Flussdiagramm eines Verfahrens 100 zum Steuern eines Planarantriebssystems 200 gemäß einer Ausführungsform.

Das erfindungsgemäße Verfahren 100 zum Steuern eines Planarantriebssystems 200 ist auf ein Planarantriebssystem 200 gemäß den zu den Figuren 1 bis 7 beschriebenen Ausführungsformen anwendbar. Ein derartiges Planarantriebssystem 200 umfasst eine Statoreinheit 300 mit einer Mehrzahl von Spulengruppen 321 zum Erzeugen eines oder mehrerer Statormagnetfelder und einem Läufer 400 mit einer Mehrzahl von Magneteinheiten 407 zum Erzeugen eines Läufermagnetfelds. Über die magnetische Kopplung zwischen den Statormagnetfeldern und dem Läufermagnetfeld kann der Läufer 400 auf der Statoreinheit 300 in translatorischen bzw. rotatorischen Bewegungen angetrieben werden. Wie in den oben beschriebenen Ausführungsformen gezeigt, kann die Mehrzahl von Spulengruppen 321 rechteckig ausgebildete X-Spulengruppen 323 und rechteckig ausgebildete Y-Spulengruppen 325 umfassen, wobei die X-Spulengruppen 323 entlang einer X-Richtung der Statoreinheit 300 und die Y-Spulengruppen 325 entlang einer Y-Richtung der Statoreinheit 300 ausgerichtet sind. Die Magneteinheiten 407 des Läufers 400 können ebenfalls rechteckig ausgebildete X-Magneteinheiten 411, 413 und rechteckig ausgebildete Y-Magneteinheiten 415, 417 umfassen, die jeweils entlang der X-Richtung bzw. Y-Richtung des Läufers 400 ausgerichtet sind.

Zum Steuern des Läufers 400 auf der Statoreinheit 300 wird der Läufer 400 zunächst in einem Verfahrschritt 101 in die Rotationsposition RP des Läufers 400 auf der Statoreinheit 300 verfahren. Die Rotationsposition RP ist hierbei dadurch charakterisiert, dass in der Rotationsposition der Läufer 400 in jeder Orientierung des Läufers 400 relativ zur Statoreinheit 300 durch jede Magneteinheit 407 des Läufers 400 wenigstens eine Spulengruppe 321 der Statoreinheit 300 überdeckt, die von keiner weiteren Magneteinheit 407 des Läufers 400 überdeckt wird.

Zum Verfahren des Läufers 400 gemäß dem Verfahrschritt 101 können gemäß der Beschreibung zu Fig. 6 die von den Magneteinheiten 407 überdeckten Spulengruppen 321 angesteuert und entsprechend bestromt werden. Die hierdurch erzeugten Statormagnetfelder der bestromten Spulengruppen 321 bewirken auf die jeweils die Spulengruppen 321 überdeckenden Magneteinheiten 407 einwirkende magnetische Kräfte, wobei die Gesamtheit der auf die Mehrzahl von Magneteinheiten 407 einwirkenden magnetischen Kräfte zu einer auf das Zentrum Z des Läufers 400 einwirkenden Gesamtkraft Fx, Fy, Fz führen, die eine entsprechende Bewegung bzw. ein Verfahren des Läufers 400 bewirkt.

Zum Verfahren des Läufers 400 ist der Läufer 400 gemäß der Fig. 6 vorzugsweise derart auf der Statoreinheit 300 angeordnet, dass eine parallele Ausrichtung der X-Magneteinheiten 411, 413 mit den X-Spulengruppen 323 und eine parallele Ausrichtung der Y-Magneteinheiten 415, 417 mit den Y-Spulengruppen 325 erreicht wird.

Gemäß der Beschreibung zu Fig. 6 erfolgt ein Verfahren des Läufers 400 durch das entsprechende Ansteuern der durch die X- bzw. Y-Magneteinheiten 411, 413, 415, 417 des Läufers 400 überdeckten X- bzw. Y-Spulengruppen 323, 325, wobei bei der beschriebenen parallelen Ausrichtung der Magneteinheiten 407 zu den entsprechenden Spulengruppen 321 die angesteuerten X-Spulengruppen 323 auf die entsprechenden X-Magneteinheiten 411, 413 und die angesteuerten Y-Spulengruppen 325 auf die jeweiligen Y-Magneteinheiten 415, 417 einwirken.

Ein Verfahren des Läufers 400 in die Rotationsposition RP kann gemäß dem Beispiel in Fig. 6 mittels einer diagonalen Bewegung entlang einer XY-Richtung erfolgen. Alternativ kann ein Verfahren des Läufers in die Rotationsposition RP gemäß einer geeigneten Abfolge von translatorischen Bewegungen entlang der X-Richtung bzw. Y-Richtung der Statoreinheit 300 erfolgen.

Ein Positionieren des Läufers 400 in der Rotationsposition RP kann dadurch erreicht werden, dass das Zentrum Z des Läufers 400 in der jeweiligen Rotationsposition RP positioniert wird.

Zur Positionierung des Läufers 400 in der Rotationsposition RP werden in einem Ansteuerungsschritt 103 zumindest die Spulengruppen 321 angesteuert, die von den Magneteinheiten 407 des Läufers 400 in der Rotationsposition RP überdeckt sind. Durch das Ansteuern der Spulengruppen werden entsprechende Statormagnetfelder mit entsprechenden X- oder Y-Komponenten 3Bx, 3By und Z-Komponenten 3Bz, gemäß der Beschreibung zu Fig. 6 erzeugt.

Durch die Erzeugung der entsprechenden Statormagnetfelder der angesteuerten Spulengruppen 321 und der auf der Kopplung zwischen den Statormagnetfeldern der angesteuerten Spulengruppen 321 und den Läufermagnetfeldern der jeweiligen Magneteinheiten 407 basierenden auf die Magneteinheiten 407 einwirkenden magnetischen Kräfte wird der Läufer 400 in einem Rotationsschritt 105 um eine zur Statoroberfläche 303 der Statoreinheit 300 senkrecht orientierten Rotationsachse um den vorbestimmten Drehwinkel α gedreht. Eine Ansteuerung der von den Magneteinheiten 407 des Läufers 400 überdeckten Spulengruppen 321 kann gemäß dem zu Fig. 7 beschriebenen Beispiel ausgeführt werden.

Gemäß einer Ausführungsform kann die Statoreinheit 300 eine Mehrzahl von Statorsegmenten 308 umfassen, die jeweils rechteckig ausgebildet und in X- bzw. Y-Richtung nebeneinander angeordnet sind. Jedes Statorsegment 308 kann hierbei jeweils eine Mehrzahl von X-Spulengruppen 323 und Y-Spulengruppen 325 umfassen, wobei die Spulengruppen 321 verschiedener Statorsegmente 308 separiert voneinander ansteuerbar sind. Die Rotationsposition RP kann hierbei durch eine Position auf der Statoreinheit 300 gebildet sein, in der vier Statorsegmente 308 aneinander angrenzen. Die beschriebene Ausführungsform kann beispielsweise gemäß dem Beispiel in Fig. 7 ausgeführt sein.

Analog zu den Ausführungsformen in Fig. 6 und Fig. 7 können die X-Spulengruppen 323 eingerichtet sein, ein Statormagnetfeld mit einer Y-Komponente und einer Z-Komponente zu erzeugen, während die Y-Spulengruppen 325 eingerichtet sein können, ein Statormagnetfeld mit einer X-Komponente und einer Z-Komponente zu erzeugen. Die X-Magneteinheiten 411, 413 können wiederum eingerichtet sein, ein Läufermagnetfeld mit einer Y-Komponente und einer Z-Komponente zu erzeugen, während die Y-Magneteinheiten 415, 417 eingerichtet sein können, ein Läufermagnetfeld mit einer X-Komponente und einer Z-Komponente zu erzeugen.

Eine Rotation des Läufers 400 in der Rotationsposition RP kann um einen beliebigen Drehwinkel $\alpha$ zwischen 0 und 360° erfolgen. Mehrfache Rotationen um ein Vielfaches des Drehwinkels $\alpha$ sind ebenfalls möglich. Eine Rotationsrichtung kann darüber hinaus beliebig gewählt werden.

Nach Beendigung der Rotation des Läufers 400 in der Rotationsposition RP kann der Läufer 400 mittels einer weiteren translativen Bewegung aus der RP heraus in weiteren Positionen auf der Statoreinheit 300 verfahren werden. Hierzu kann der Läufer 400 in der Rotationsposition RP erneut in eine parallele Ausrichtung zu den Spulengruppen 321 gebracht werden, in der die Magneteinheiten 407 des Läufers 400 jeweils parallel zu den X-Spulengruppen 323 oder den Y-Spulengruppen 325 angeordnet sind.

Fig. 9 zeigt ein weiteres Flussdiagramm des Verfahrens 100 zum Steuern eines Planarantriebssystems 200 gemäß einer weiteren Ausführungsform.

Die in Fig. 9 gezeigte Ausführungsform des Verfahrens 100 basiert auf der Ausführungsform in Fig. 8 und umfasst alle dort beschriebenen Verfahrensschritte. Sofern diese in der gezeigten Ausführungsform unverändert bleiben, wird von einer erneuten detaillierten Beschreibung abgesehen.

In der gezeigten Ausführungsform umfasst der Verfahrschritt 101 einen Bestromungsschritt 127. Zum Verfahren des Läufers 400 in die Rotationsposition RP werden im Bestromungsschritt 127 mehrere Spulengruppen 321 mit einer gemeinsamen Sollbestromung bestromt. Bei einer gemeinsamen Bestromung mehrerer Spulengruppen 321 mit der gemeinsamen Sollbestromung werden die jeweiligen Spulengruppen mit einem identischen Erregerstrom versorgt. Die einzelnen Spulengruppen 321 können somit zwar einzeln angesteuert werden, erhalten jedoch zur Ansteuerung identische Bestromungswerte, wodurch die gemeinsame Sollbestromung gegeben ist.

In der gezeigten Ausführungsform in Fig. 6 können zur gemeinsamen Sollbestromung beispielsweise für die erste X-Spulengruppe X11 des ersten Statorsegments S1, die zweite X-Spulengruppe X32 des dritten Statorsegments S3 und die zweite X-Spulengruppe X42 des vierten Statorsegments S4 mit einer identischen Sollbestromung bestromt werden. Über die genannten X-Spulengruppen X11, X32 und X42 werden die ersten und zweiten X-Magneteinheiten 411, 413 angesteuert und eine magnetische Kraft in Y- und Z-Richtung erzeugt. Alternativ oder zusätzlich können die erste Y-Spulengruppe Y21 des zweiten Statorsegments S2, die erste Y-Spulengruppe Y31 des dritten Statorsegments S3 und die zweite Y-Spulengruppe Y42 des vierten Statorsegments S4 ebenfalls mit einer gemeinsamen Sollbestromung bestromt werden. Über die genannten Y-Spulengruppen Y21, Y31 und Y42 werden die ersten und zweiten Y-Magneteinheiten 415, 417 angesteuert und hierdurch eine X-Bewegung des Läufers 400 bewirkt. Für die beschriebene lineare Translationsbewegung des Läufers 400 können somit die X-Spuleneinheiten, über die die entsprechenden X-Magneteinheiten 411, 413 angesteuert werden, mit einer identischen Sollbestromung bestromt werden, während die entsprechenden Y-Spuleneinheiten, über die die Y-Magneteinheiten 415, 417 angesteuert werden, mit einer entsprechenden weiteren gemeinsamen Sollbestromung, sprich mit identischen Erregerströmen, bestromt werden können.

Alternativ können die erste X-Spulengruppe X11 des ersten Statorsegments S1 und die zweite X-Spulengruppe X32 des dritten Statorsegments S3 und die zweite X-Spulengruppe X42 des vierten Statorsegments S4 individuell bestromt werden. Gleiches gilt für die oben genannte erste Y-Spulengruppe Y21 des zweiten Statorsegments S2, die erste Y-Spulengruppe Y31 des dritten Statorsegments S3 und die zweite Y-Spulengruppe Y42 des vierten Statorsegments S4. Eine gemeinsame Bestromung kann jedoch für übereinander angeordnete Spulengruppen verschiedener Statorlagen erfolgen. So können beispielsweise erste X-Spulengruppen X11 des ersten Statorsegments S1 der ersten Statorlage 313 und der dritten Statorlage 317, wie in Fig. 4 gezeigt, erfolgen. Gleiches gilt für die zweite X-Spulengruppe X32 des dritten Statorsegments S3 und die zweite X-Spulengruppe X42 des vierten Statorsegments S4 und gegebenenfalls für die oben genannten Y-Spulengruppen, die ebenfalls gemeinsam mit entsprechenden Spulengruppen der dritten Statorlage 317 bestromt werden. Alternativ können übereinander angeordnete Spulengruppen 321 von mehr als zwei übereinander angeordneter Statorlagen mit einer gemeinsamen Sollbestromung bestromt werden.

In der gezeigten Ausführungsform umfasst der Verfahrschritt 101 ferner einen Spulenbestimmungsschritt 119, in dem die Spulengruppen 321 bestimmt werden, die von den Magnetanordnungen 407 des Läufers 400 überdeckt werden.

Die zum Steuern des Läufers 400 zu bestromenden Spulengruppen 321 können im Spulenbestimmungsschritt 119 sowohl für das lineare Verfahren des Läufers 400 gemäß dem in Fig. 6 gezeigten Beispiel als auch für das Rotieren des Läufers 400 gemäß dem in Fig. 7 gezeigten Beispiel ausgewählt werden.

Zur Bestimmung der durch die Magneteinheiten überdeckten Spulengruppen 321 werden in einem Detektionsschritt 121 die Läufermagnetfelder der einzelnen Magneteinheiten 407 des Läufers 400 durch Magnetfeldsensoren 501 der Statoreinheit 300 detektiert.

In einem Definitionsschritt 123 werden darauf basierend für die Magneteinheiten 407 des Läufers 400 Überdeckungsbereiche 329 definiert, die Bereiche der Statoreinheit 300 kennzeichnen, für die das Läufermagnetfeld der jeweiligen Magneteinheit durch die entsprechenden Magnetfeldsensoren 501 detektiert wurden.

Basierend auf den definierten Überdeckungsbereichen 329 werden in einem Ermittlungsschritt 125 die Spulengruppen 321 als durch die jeweiligen Magneteinheiten 407 des Läufers 400 überdeckt ermittelt, die wenigstens teilweise in den zuvor definierten Überdeckungsbereichen 329 angeordnet sind.

Die Überdeckungsbereiche 329 können gemäß den in Fig. 6 dargestellten Überdeckungsbereichen ausgebildet sein. Abweichend zu Fig. 6, in der aus Übersichtlichkeitsgründen ausschließlich Überdeckungsbereiche 329 für die X-Magneteinheiten 411, 413 dargestellt sind, können erfindungsgemäß für alle Magneteinheiten 407 entsprechende Überdeckungsbereiche 329 definiert sein.

Für den Läufer 400 in einer bestimmten Position auf der Statoreinheit 300 können somit über die entsprechenden Magnetfeldsensoren 501 des Sensormoduls 500 der Statoreinheit 300 die Läufermagnetfelder der einzelnen Magneteinheiten 407 detektiert werden. Durch die unterschiedlichen Ausrichtungen der Läufermagnetfelder der X-Magneteinheiten 411, 413 und der Y-Magneteinheiten 415, 417 können über die Messungen der Magnetfeldsensoren 501 die Läufermagnetfelder den einzelnen Magneteinheiten 407 zugeordnet werden. Über die Messungen der Magnetfeldsensoren 501 können Positionen der einzelnen Magnetanordnungen 407 relativ zur Statoreinheit 300 bestimmt werden. Darauf basierend kann der Überdeckungsbereich 329 für jede detektierte Magnetanordnung 407 definiert sein, wobei hierzu ein Raumbereich der Statoreinheit 300 definiert wird, indem die Position der jeweiligen Magnetanordnung 407 angeordnet ist. Die Form und Größe der einzelnen Überdeckungsbereiche 329 kann hierbei auch abweichend zu der in Fig. 6 dargestellten rechteckigen Form ausgestaltet sein.

Die Spulengruppen 321, die jeweils wenigstens teilweise in dem zuvor definierten Raumbereich 329 angeordnet sind, können im Folgenden als durch die jeweilige Magneteinheit 407 überdeckt bestimmt werden und gegebenenfalls zur Steuerung des Läufers 400 angesteuert und entsprechend bestromt werden.

In der gezeigten Ausführungsform umfasst der Ansteuerungsschritt 103 ferner einen ersten Bestromungsschritt 107. Im ersten Bestromungsschritt 107 werden die von den Magneteinheiten 407 des Läufers 400 in der Rotationsposition RP überdeckten Spulengruppen 321 individuell bestromt. Eine individuelle Bestromung der von den Magneteinheiten 407 überdeckten Spulengruppen 321 umfasst hierbei, dass die Bestromung der einzelnen Spulengruppen 321 sich in wenigstens einem Wert untereinander unterscheiden. Wie bereits in der Ausführungsform in Fig. 7 beschrieben, werden durch die Magneteinheiten 407 überdeckten Spulengruppen 321 derart angesteuert und bestromt, dass die auf die jeweiligen Magneteinheiten 407 einwirkenden magnetischen Kräfte in ihrer Gesamtheit zu einem Drehmoment MZ führen, das zu einer gewünschten Rotation des Läufers 400 führt.

Die Ausführungsform in Fig. 7 ist wie in der dortigen Beschreibung bereits erwähnt, ein ausschließlich zu Illustrationszwecken gezeigtes Beispiel, in dem gegenüber einer realen Ansteuerung lediglich eine minimale Anzahl von Spulengruppen 321 bestromt werden. Alternativ hierzu können beispielsweise jeweils vier Spulengruppen 321 pro Statorsegment 308 bestromt werden, jeweils zwei X-Spulengruppen und zwei Y-Spulengruppen, sodass zur Rotation des Läufers 400 insgesamt 16 Spulengruppen derart bestromt werden, dass die Gesamtheit der auf die vier Magneteinheiten 407 wirkenden magnetischen Kräfte zu einem Drehmoment MZ des Läufers 400 führen. Die Bestromung der einzelnen Spulengruppen ergibt sich hierbei unter anderem aus der tatsächlichen Orientierung des Läufers 400 sowie des Drehwinkels $\alpha$ der gewünschten Rotation des Läufers 400.

Zur Bestimmung der jeweils zur Rotation des Läufers 400 um den gewünschten Drehwinkel $\alpha$ benötigten Bestromung der einzelnen Spulengruppen 321 umfasst der Ansteuerungsschritt 103 ferner einen Kraftbestimmungsschritt 109. Im Kraftbestimmungsschritt 109 wird für jede Magneteinheit 407 die magnetische Kraft ermittelt, die durch ein Statormagnetfeld einer von der jeweiligen Magneteinheit 407 überdeckten Spulengruppe 321 auf die jeweilige Magneteinheit 407 einwirkt.

Hierzu wird zunächst in einem Momentberechnungsschritt 113 das für eine Rotation des Läufers 400 um den gewünschten Drehwinkel $\alpha$ benötigte und auf das Zentrum Z des Läufers 400 einwirkende Drehmoment MZ berechnet, das geeignet ist, eine entsprechende Rotation des Läufers 400 zu bewirken. Die Berechnung kann basierend auf den individuellen Eigenschaften des Läufers 400, wie beispielsweise Gewicht, Größe oder Beladung des Läufers 400, durchgeführt werden.

Darauf folgend wird in einem Kraftberechnungsschritt 115 die Mehrzahl von magnetischen Kräften, die auf die einzelnen Magneteinheiten 407 des Läufers 400 einwirken und die in Gesamtheit zu dem Drehmoment MZ des Läufers 400 führen, berechnet. Die Berechnung der auf die Magneteinheiten 407 einwirkenden magnetischen Kräfte kann wiederum basierend auf den Eigenschaften des Läufers 400 wie auch auf den Eigenschaften der einzelnen Läufermagnetfelder der Magneteinheiten 407 durchgeführt werden.

Nach Bestimmung der zur Rotation des Läufers 400 um den gewünschten Drehwinkel $\alpha$ benötigten auf die einzelnen Magneteinheiten 407 einwirkenden magnetischen Kräfte im Kraftbestimmungsschritt 109 werden in einem Bestromungsbestimmungsschritt 111 die individuellen Bestromungen der einzelnen durch die Magneteinheiten 407 überdeckten Spulenanordnung 321 bestimmt, mit denen die überdeckten Spulenanordnungen 321 zu bestromen sind, um auf die jeweiligen Magneteinheiten 407 die benötigten magnetischen Kräfte einwirken zu lassen, die zu dem für die gewünschte Rotation benötigten Drehmoment MZ führen.

Hierzu werden in einem Bestromungsberechnungsschritt 117 die entsprechend zur Erzeugung der magnetischen Kräfte benötigten Bestromungswerte der zu bestromenden Spulengruppen 321 berechnet.

Diese Berechnung der einzelnen Bestromungen der zu bestromenden Spulengruppen 321 kann beispielsweise durch die Steuereinheit 201 des Planarantriebssystems 200 während der Steuerung des Läufers 400 und somit während der Rotation des Läufers 400 durchgeführt werden. Zur Berechnung kann hierbei die oben beschriebene Relation zwischen Bestromungswerten der einzelnen Spulengruppen 321 und der erzeugten magnetischen Kraft auf die verschiedenen Magneteinheiten 407 berücksichtigt werden.

Alternativ oder zusätzlich kann zur Berechnung im Bestromungsberechnungsschritt 117 der zur Erzeugung der berechneten magnetischen Kräfte notwendigen individuellen Bestromungen der Spulengruppen 321 eine entsprechende Simulation durchgeführt werden. Die aus der Simulation generierten Werte können beispielsweise in einer entsprechenden Datenbank oder Look-up-Tabelle gespeichert werden. Zur Steuerung des Läufers 400 und insbesondere zur Rotation des Läufers 400 um einen gewünschten Drehwinkel $\alpha$ können somit durch die Steuereinheit 201 die entsprechenden Werte aus der Datenbank bzw. der Look-up-Tabelle eingelesen werden.

Basierend auf wie oben beschrieben errechneten Bestromungswerten können darauf folgend im ersten Bestromungsschritt 107 die im Spulenbestimmungsschritt 119 ausgewählten Spulengruppen 321 entsprechend bestromt werden.

Die vier in der Rotationsposition RP aneinander angrenzenden Statorsegmente 308 können vier Statorsegmente eines Statormoduls 301 sein. Alternativ können die vier Statorsegmente 308 jeweils paarweise auf zwei aneinander angrenzende Statormodule 301 verteilet sein. Alternativ können die vier Statorsegmente 308 jeweils Statorsegmente 308 vier verschiedener aneinander angrenzender Statormodule 301 sein.

Bezugszeichenliste

| | |
|---|---|
| 100 | Verfahren zum Steuern eines Planarantriebssystems |
| 101 | Verfahrschritt |
| 103 | Ansteuerungsschritt |
| 105 | Rotationsschritt |
| 107 | erster Bestromungsschritt |
| 109 | Kraftbestimmungsschritt |
| 111 | Bestromungsbestimmungsschritt |
| 113 | Momentberechnungsschritt |
| 115 | Kraftberechnungsschritt |
| 117 | Bestromungsberechnungsschritt |
| 119 | Spulenbestimmungsschritt |
| 121 | Detektionsschritt |
| 123 | Definitionsschritt |
| 125 | Ermittlungsschritt |
| 127 | zweiter Bestromungsschritt |
| 200 | Planarantriebssystem |
| 201 | Steuereinheit |
| 203 | Datenverbindung |
| 300 | Statoreinheit |
| 301 | Statormodul |
| 303 | Statoroberfläche |
| 305 | Statormodulgehäuse |
| 307 | Anschlussleitung |
| 308 | Statorsegment |
| 309 | Statorleiter |
| 311 | Kontaktstruktur |
| 313 | erste Statorlage |
| 315 | zweite Statorlage |
| 317 | dritte Statorlage |
| 319 | vierte Statorlage |
| 321 | Spulengruppe |
| 323 | X-Spulengruppe |
| 325 | Y-Spulengruppe |
| 327 | Kontaktstruktur |
| 329 | Überdeckungsbereich |
| 400 | Läufer |
| 401 | Magnetanordnung |
| 402 | Lauffläche |
| 403 | Freifläche |
| 405 | Befestigungsstruktur |
| 407 | Magneteinheit |
| 409 | Magnetelement |
| 411 | erste X-Magneteinheit |
| 413 | zweite X-Magneteinheit |
| 415 | erste Y-Magneteinheit |
| 417 | zweite Y-Magneteinheit |
| 419 | Läufervorzugsrichtung |

S1     erstes Statorsegment
S2     zweites Statorsegment
S3     drittes Statorsegment
S1     viertes Statorsegment

X11     erste X-Spulengruppe des ersten Statorsegments
X12     zweite X-Spulengruppe des ersten Statorsegments
X13     dritte X-Spulengruppe des ersten Statorsegments
X21     erste X-Spulengruppe des zweiten Statorsegments
X22     zweite X-Spulengruppe des zweiten Statorsegments
X23     dritte X-Spulengruppe des zweiten Statorsegments
X31     erste X-Spulengruppe des dritten Statorsegments
X32     zweite X-Spulengruppe des dritten Statorsegments
X33     dritte X-Spulengruppe des dritten Statorsegments
X41     erste X-Spulengruppe des vierten Statorsegments
X42     zweite X-Spulengruppe des vierten Statorsegments
X43     dritte X-Spulengruppe des vierten Statorsegments

Y11     erste Y-Spulengruppe des ersten Statorsegments
Y12     zweite Y-Spulengruppe des ersten Statorsegments
Y13     dritte Y-Spulengruppe des ersten Statorsegments
Y21     erste Y-Spulengruppe des zweiten Statorsegments
Y22     zweite Y-Spulengruppe des zweiten Statorsegments
Y23     dritte Y-Spulengruppe des zweiten Statorsegments
Y31     erste Y-Spulengruppe des dritten Statorsegments
Y32     zweite Y-Spulengruppe des dritten Statorsegments
Y33     dritte Y-Spulengruppe des dritten Statorsegments
Y41     erste Y-Spulengruppe des vierten Statorsegments
Y42     zweite Y-Spulengruppe des vierten Statorsegments
Y43     dritte Y-Spulengruppe des vierten Statorsegments

3Bx     x-Komponente des magnetischen Felds einer Spulengruppe
3By     y-Komponente des magnetischen Felds einer Spulengruppe
3Bz     z-Komponente des magnetischen Felds einer Spulengruppe
4Bx     x-Komponente des magnetischen Felds einer Magneteinheit
4By     x-Komponente des magnetischen Felds einer Magneteinheit
4Bz     x-Komponente des magnetischen Felds einer Magneteinheit

Fx     x-Komponente der magnetischen Kraft auf den Läufer
Fy     y-Komponente der magnetischen Kraft auf den Läufer
Fz     z-Komponente der magnetischen Kraft auf den Läufer

Fx1     x-Komponente der magnetischen Kraft auf Magneteinheit
Fy1     y-Komponente der magnetischen Kraft auf Magneteinheit
Fz1     z-Komponente der magnetischen Kraft auf Magneteinheit

Fx2     x-Komponente der magnetischen Kraft auf Magneteinheit
Fy2     y-Komponente der magnetischen Kraft auf Magneteinheit
Fz2     z-Komponente der magnetischen Kraft auf Magneteinheit

Fx3     x-Komponente der magnetischen Kraft auf Magneteinheit
Fy3     y-Komponente der magnetischen Kraft auf Magneteinheit
Fz3     z-Komponente der magnetischen Kraft auf Magneteinheit

Fx4     x-Komponente der magnetischen Kraft auf Magneteinheit
Fy4     y-Komponente der magnetischen Kraft auf Magneteinheit
Fz4     z-Komponente der magnetischen Kraft auf Magneteinheit

Mz     z-Komponente des Drehmoments des Läufers
α     Drehwinkel
RP     Rotationsposition
Z     Zentrum des Läufers

500     Sensormodul
501     Magnetfeldsensor

**Patentansprüche**

1.   Verfahren (100) zum Steuern eines Planarantriebssystems (200), wobei das Planarantriebssystem (200) eine Statoreinheit (300) mit einer Mehrzahl von Spulengruppen (321) zum Erzeugen eines Statormagnetfelds und einen Läufer (400) mit einer Mehrzahl von Magneteinheiten (407) zum Erzeugen eines Läufermagnetfelds umfasst, wobei über eine magnetische Kopplung zwischen dem Statormagnetfeld und dem Läufermagnetfeld der Läufer (400) auf der Statoreinheit (300) antreibbar ist, wobei die Mehrzahl von Spulengruppen (321) rechteckig ausgebildete X-Spulengruppen (323) und rechteckig ausgebildete Y-Spulengruppen (325) umfasst, wobei die X-Spulengruppen (323) entlang einer X-Richtung der Statoreinheit (300) und die Y-Spulengruppen (325) entlang einer senkrecht zur X-Richtung orientierten Y-Richtung der Statoreinheit (300) erstreckt sind, wobei die X-Spulengruppen (323) und die Y-Spulengruppen (325) entlang der X-Richtung und entlang der Y-Richtung der Statoreinheit (300) angeordnet sind, wobei jede Spulengruppe (321) jeweils eine Mehrzahl von sich in X-Richtung oder Y-Richtung erstreckenden Statorleitern (309) umfasst, wobei die X-Spulengruppen (323) eingerichtet sind, Y-Komponenten und Z-Komponenten des Statormagnetfelds zu erzeugen, wobei die Y-Spulengruppen (325) eingerichtet sind, X-Komponenten und Z-Komponenten des Statormagnetfelds zu erzeugen, wobei die X-Komponenten entlang der X-Richtung, die Y-Komponente entlang der Y-Richtung und die Z-Komponenten entlang einer zur X-Richtung und zur Y-Richtung senkrecht orientierten Z-Richtung der Statoreinheit (300) ausgerichtet sind, wobei die Mehrzahl von Magneteinheiten (407) des Läufers (400) rechteckig ausgebildete X-Magneteinheiten (411, 413) und rechteckig ausgebildete Y-Magneteinheiten (415, 417) umfasst, wobei die X-Magneteinheiten (411, 413) entlang einer X-Richtung des Läufers (400) erstreckt sind, und wobei die Y-Magneteinheiten (415, 417) entlang einer zur X-Richtung senkrecht orientierten Y-Richtung des Läufers (400) erstreckt sind, wobei die X-Magneteinheiten (411, 413) eingerichtet ist, Y-Komponenten und Z-Komponenten des Läufermagnetfelds zu erzeugen, wobei die Y-Magneteinheiten (415, 417) eingerichtet sind, X-Komponenten und Z-Komponenten des Läufermagnetfelds zu erzeugen, wobei die X-Komponenten entlang der X-Richtung, die Y-Komponente entlang der Y-Richtung und die Z-Komponente entlang einer zur X-Richtung und zur Y-Richtung senkrecht orientierten Z-Richtung des Läufers (400) ausgerichtet sind, **dadurch gekennzeichnet, dass** das Verfahren (100) umfasst:

Verfahren des Läufers (400) in eine Rotationsposition (RP) des Läufers (400) auf der Statoreinheit (300) in einem Verfahrschritt (101), wobei in der Rotationsposition (RP) in jeder Orientierung des Läufers (400) relativ zur Statoreinheit (300) jede Magneteinheit (407) des Läufers (400) eine Spulengruppe (321) der Statoreinheit (300) überdeckt, die von keiner weiteren Magneteinheit (407) des Läufers (400) überdeckt wird;

Ansteuern der Spulengruppen (321), die von den Magneteinheit (407) des Läufers (400) in der Rotationsposition (RP) überdeckt sind, und Erzeugen eines Statormagnetfelds durch jede angesteuerte Spulengruppe (321) in einem Ansteuerungsschritt (103); und

Rotieren des Läufers (400) um eine zu einer Statoroberfläche (303) der Statoreinheit (300) senkrecht orientierte Rotationsachse um einen vorbestimmten Drehwinkel ($\alpha$) durch die Statormagnetfelder der angesteuerten durch die Magneteinheiten (407) des Läufers (400) überdeckten Spulengruppen (321) in einem Rotationsschritt (105).

2. Verfahren (100) nach Anspruch 1, wobei die Statoreinheit (300) eine Mehrzahl von Statorsegmenten (308) umfasst, wobei die Statorsegmente (308) rechteckig ausgebildet sind und paarweise in X-Richtung oder Y-Richtung nebeneinander angeordnet sind, wobei jedes Statorsegment (308) jeweils X-Spulengruppen (323) und Y-Spulengruppen (325) umfasst, die von X-Spulengruppen (323) und Y-Spulengruppen (325) andere Statorsegmente (308) separiert sind, und wobei die Rotationsposition (RP) eine Position auf der Statoreinheit (300) ist, in der vier Statorsegmente (308) aneinander angrenzen.

3. Verfahren (100) nach einem der voranstehenden Ansprüche, wobei der Ansteuerungsschritt (103) umfasst:
Bestromen jeder der von den Magneteinheiten (407) überdeckten Spulengruppen (321) mit einer individuellen Bestromung in einem ersten Bestromungsschritt (107).

4. Verfahren (100) nach Anspruch 3, wobei der Ansteuerungsschritt (103) umfasst:

Bestimmen einer durch ein Statormagnetfeld einer Spulengruppe (321) auf eine die Spulengruppe (321) überdeckende Magneteinheit (407) wirkende magnetische Kraft in einem Kraftbestimmungsschritt (109);
Bestimmen einer individuellen Bestromung für jede der von den Magneteinheiten (407) überdeckten Spulengruppen (321) in einem Bestromungsbestimmungsschritt (111), derart dass durch eine Gesamtheit der durch die Statormagnetfelder gemäß der individuellen Bestromungen der Spulengruppen (321) auf die Magneteinheiten (407) wirkenden magnetischen Kräfte ein Drehmoment des Läufers (400) um die Rotationsachse generiert wird, das eingerichtet ist, die Rotation des Läufers um den Drehwinkel (α) zu bewirken.

5. Verfahren (100) nach Anspruch 4, wobei der Kraftbestimmungsschritt (109) umfasst:

Berechnen des für die Rotation um den vorbestimmten Drehwinkel (α) benötigten Drehmoments in einem Momentberechnungsschritt (113);
Berechnen der zur Erzeugung des Drehmoments benötigten und auf die einzelnen Magneteinheiten (407) des Läufers (400) einwirkenden magnetischen Kräfte in einem Kraftberechnungsschritt (115); und wobei der Bestromungsbestimmungsschritt (111) umfasst:
Berechnen der zur Erzeugung der berechneten magnetischen Kräfte notwendigen individuellen Bestromungen der Spulengruppen (321) in einem Bestromungsberechnungsschritt (117).

6. Verfahren (100) nach Anspruch 5, wobei die Berechnungen des Drehmoments und der Kräfte in dem Kraftbestimmungsschritt (109) und der Bestromungen in dem Bestromungsbestimmungsschritt (111) durch eine Steuereinheit (201) des Planarantriebssystems (200) während der Steuerung des Läufers (400) durchgeführt werden.

7. Verfahren (100) nach Anspruch 5 oder 6, wobei die Berechnungen des Drehmoments und/oder der Kräfte in dem Kraftbestimmungsschritt (109) und/oder der Bestromungen in dem Bestromungsbestimmungsschritt (111) Simulationen umfassen, wobei die Simulationen auf einer Modellbeschreibung eines Verhältnisses zwischen Bestromung der Spulengruppen (321) und auf die Magneteinheiten (407) einwirkender magnetischer Kräfte und/oder auf einer Modellbeschreibung eines Verhältnisses zwischen Bestromung der Spulengruppen (321) und auf den Läufer (400) einwirkendes Drehmoment basieren.

8. Verfahren (100) nach einem der voranstehenden Ansprüche, wobei der Verfahrschritt (101) umfasst:
Bestimmen der Spulengruppen (321) der Statoreinheit (300), die von der Magneteinheiten (407) des Läufers (400) überdeckt werden, in einem Spulenbestimmungsschritt (119).

9. Verfahren (100) nach Anspruch 8, wobei der Spulenbestimmungsschritt (119) umfasst:

Detektieren der Läufermagnetfelder der einzelnen Magneteinheiten (407) des Läufers (400) durch Magnetfeldsensoren (501) der Statoreinheit (300) in einem Detektionsschritt (121);
Definieren eines Überdeckungsbereichs (329) für jede Magneteinheit (407) in einem Definitionsschritt (123), wobei der Überdeckungsbereich (329) einen Bereich der Statoreinheit (300) kennzeichnet, der die das Läufermagnetfeld der jeweiligen Magneteinheit (407) detektierenden Magnetfeldsensoren (501) umfasst; und
Ermitteln der Spulengruppen (321), die wenigstens teilweise in einem Überdeckungsbereich (329) angeordnet sind, in einem Ermittlungsschritt (125).

10. Verfahren (100) nach einem der voranstehenden Ansprüche, wobei der Verfahrschritt (101) umfasst:
Bestromen einer Mehrzahl von Spulengruppen (321) mit einer gemeinsamen SollBestromung in einem zweiten Bestromungsschritt (127).

11. Verfahren (100) nach einem der voranstehenden Ansprüche 2 bis 10, wobei der Läufer (400) zwei X-Magneteinheiten (411, 413) und zwei Y-Magneteinheiten (415, 417) umfasst, wobei die X-Magneteinheiten (411, 413) in Y-Richtung an gegenüberliegenden Seiten des Läufers (400) und die Y-Magneteinheit (415, 417) in X-Richtung an gegenüberliegenden Seiten des Läufers (400) angeordnet sind, und wobei in der Rotationsposition (RP) durch die Magneteinheiten (407) wenigstens vier Spulengruppen (321) überdeckt werden, und wobei jede der vier Spulengruppen (321) jeweils in einem Statorsegment (308) angeordnet ist.

12. Verfahren (100) nach einem der voranstehenden Ansprüche, wobei der Drehwinkel (α) für jeden Wert zwischen 0° und 360° wählbar ist.

**Claims**

1. A method (100) for controlling a planar drive system (200), wherein the planar drive system (200) comprises a stator unit (300) with a plurality of coil groups (321) for generating a stator magnetic field and a rotor (400) with a plurality of magnet units (407) for generating a rotor magnetic field, wherein the rotor (400) can be driven on the stator unit (300) via magnetic coupling between the stator magnetic field and the rotor magnetic field, wherein the plurality of coil groups (321) comprises rectangular X coil groups (323) and rectangular Y coil groups (325), wherein the X coil groups (323) are aligned along an X direction of the stator unit (300) and the Y coil groups (325) are aligned along a Y direction of the stator unit (300) that is perpendicular to the X direction, wherein the X coil groups (323) and the Y coil groups (325) are arranged along the X direction and along the Y direction of the stator unit (300), wherein each coil group (321) comprises a plurality of stator conductors (309) extending in the X direction or in the Y direction, wherein the X coil groups (323) are set up to generate Y components and Z components of the stator magnetic field, wherein the Y coil groups (325) are set up to generate X components and Z components of the stator magnetic field, wherein the X components are aligned along the X direction, the Y components are aligned along the Y direction and the Z components are aligned along the X direction and along the Z direction of the stator unit (300) oriented perpendicularly with regard to the Y direction, wherein the plurality of magnet units (407) of the rotor (400) comprises rectangular X magnet units (411, 413) and rectangular Y magnet units (415, 417), wherein the X magnet units (411, 413) are aligned along an X direction of the rotor (400), wherein the Y magnet units (415, 417) are aligned along a Y direction of the rotor (400) that is perpendicular to the X direction, wherein the X magnet units (411, 413) are set up to generate Y components and Z components of the rotor magnetic field, wherein the Y magnet units (415, 417) are set up to generate X components and Z components of the rotor magnetic field, wherein the X components are aligned along the X direction, the Y component is aligned along the Y direction and the Z component is aligned along a Z direction of the rotor (400) oriented perpendicularly with regard to the Z direction and to the Y direction, **characterized in that** the method (100) comprises:

> moving the rotor (400) to a rotational position (RP) of the rotor (400) on the stator unit (300) in a movement step (101), wherein, in the rotational position (RP), each magnet unit (407) of the rotor (400) covers a coil group (321) of the stator unit (300) which is not covered by any other magnet unit (407) of the rotor (400) in each orientation of the rotor (400) relative to the stator unit (300);
> actuating the coil groups (321) which are covered by the magnet units (407) of the rotor (400) in the rotational position (RP) and generating a stator magnetic field by each actuated coil group (321) in an actuation step (103); and
> rotating the rotor (400) about an axis of rotation that is oriented perpendicular to a stator surface (303) of the stator unit (300) by a predetermined angle of rotation ($\alpha$) by way of the stator magnetic fields of the actuated coil groups (321) covered by the magnet units (407) of the rotor (400) in a rotation step (105).

2. The method (100) according to claim 1, wherein the stator unit (300) comprises a plurality of stator segments (308), wherein the stator segments (308) are rectangular and are arranged in pairs next to one another in the X direction or Y direction, wherein each stator segment (308) comprises respective X coil groups (323) and Y coil groups (325) separated from X coil groups (323) and Y coil groups (325) of other stator segments (308), and wherein the rotational position (RP) is a position on the stator assembly (300) in which four stator segments (308) are adjacent to one another.

3. The method (100) according to any one of the preceding claims, wherein the actuation step (103) comprises:
   energizing each of the coil groups (321) covered by the magnet units (407) by individual energization in a first energization step (107).

4. The method (100) according to claim 3, wherein the actuation step (103) comprises:

   > determining a magnetic force which acts on a magnet unit (407) covering the coil group (321) by a stator magnetic field of a coil group (321) in a force determination step (109);
   > determining an individual energization for each of the coil groups (321) covered by the magnet units (407) in an energization determination step (111), such that a torque of the rotor (400) about the axis of rotation is generated by a totality of the magnetic forces acting on the magnet units (407) by means of the stator magnetic fields according to the individual energization of the coil groups (321), which torque is adapted to cause rotation of the rotor by the angle of rotation ($\alpha$).

5. The method (100) according to claim 4, wherein the force determination step (109) comprises:

   > calculating the torque required for the rotation by the predetermined rotation angle ($\alpha$) in a torque calculation step (113);
   > calculating the magnetic forces required to generate the torque and acting on the individual magnet units (407) of the rotor (400) in a force calculation step (115); and
   > wherein the energization determination step (111) comprises:
   > calculating of the individual energizations of the coil groups (321) required to generate the calculated magnetic forces in an energization calculation step (117).

6. The method (100) according to claim 5, wherein the calculations of the torque and the forces in the force determination step (109) and of the energizations in the energization determination step (111) are performed by a control unit (201) of the planar drive system (200) during the control of the rotor (400).

7. The method (100) according to claim 5 or 6, wherein the calculations of the torque and/or the forces in the force determination step (109) and/or the energizations in the energization determination step (111) comprise simulations, wherein the simulations are based on a model description of a relationship between energization of the coil groups (321) and magnetic forces acting on the magnet units (407), and/or on a model description of a relationship between the energization of the coil groups (321) and the torque acting on the rotor (400).

8. The method (100) according to any one of the preceding claims, wherein the movement step (101) comprises:
determining the coil groups (321) of the stator unit (300) which are covered by the magnet units (407) of the rotor (400) in a coil determination step (119).

9. The method (100) according to claim 8, wherein the coil determination step (119) comprises:

detecting the rotor magnetic fields of the individual magnet units (407) of the rotor (400) by magnetic field sensors (501) of the stator unit (300) in a detection step (121);
defining an overlap area (329) for each magnet unit (407) in a definition step (123), wherein the overlap area (329) identifies an area of the stator unit (300) that includes the magnetic field sensors (501) detecting the rotor magnetic field of the respective magnet unit (407); and
identifying the coil groups (321) that are at least partially arranged in an overlap area (329) in an identification step (125).

10. The method (100) according to any one of the preceding claims, wherein the movement step (101) comprises:
energizing a plurality of coil groups (321) with a common target energization in a second energization step (127).

11. The method (100) according to any one of the preceding claims 2 to 10, wherein the rotor (400) comprises two X magnet units (411, 413) and two Y magnet units (415, 417), wherein the X magnet units (411, 413) are arranged in the Y direction on opposite sides of the rotor (400) and the Y magnet unit (415, 417) are arranged in the X direction on opposite sides of the rotor (400), and wherein at least four coil groups (321) are covered by the magnet units (407) in the rotational position (RP), and wherein each of the four coil groups (321) is arranged in a respective stator segment (308).

12. The method (100) according to any one of the preceding claims, wherein the angle of rotation (α) can be selected for any value between 0° and 360°.

## Revendications

1. Procédé (100) pour commander un système d'entraînement planaire (200), le système d'entraînement planaire (200) comprenant une unité de stator (300) avec une pluralité de groupes de bobines (321) pour générer un champ magnétique de stator et un rotor (400) avec une pluralité d'unités magnétiques (407) pour générer un champ magnétique de rotor, le rotor (400) pouvant être entraîné sur l'unité de stator (300) par l'intermédiaire d'un couplage magnétique entre le champ magnétique de stator et le champ magnétique de rotor, la pluralité de groupes de bobines (321) comprenant des groupes de bobines X réalisées sous forme rectangulaire (323) et des groupes de bobines Y réalisées sous forme rectangulaire (325), les groupes de bobines X (323) s'étendant le long d'une direction X de l'unité de stator (300) et les groupes de bobines Y (325) s'étendant le long d'une direction Y de l'unité de stator (300) orientée perpendiculairement à la direction X, les groupes de bobines X (323) et les groupes de bobines Y (325) étant agencés le long de la direction X et le long de la direction Y de l'unité de stator (300), chaque groupe de bobines (321) comprenant respectivement une pluralité de conducteurs de stator (309) s'étendant dans la direction X ou la direction Y, les groupes de bobines X (323) étant adaptés pour générer des composantes Y et des composantes Z du champ magnétique de stator, les groupes de bobines Y (325) étant adaptés pour générer des composantes X et des composantes Z du champ magnétique de stator, les composantes X étant orientées le long de la direction X, les composantes Y le long de la direction Y et les composantes Z le long d'une direction Z de l'unité de stator (300) orientée perpendiculairement à la direction X et à la direction Y, la pluralité d'unités magnétiques (407) du rotor (400) comprenant des unités magnétiques X réalisées sous forme rectangulaire (411, 413) et des unités magnétiques Y réalisées sous forme rectangulaire (415, 417), les unités magnétiques X (411, 413) s'étendant le long d'une direction X du rotor (400), et les unités magnétiques Y (415, 413) s'étendant le long d'une direction Y du rotor (400) orientée perpendiculairement à la direction X, les unités magnétiques X (411, 413) étant adaptées pour générer des composantes Y et des composantes Z du champ magnétique de rotor, les unités magnétiques Y (415, 417) étant adaptées pour générer des composantes X et des composantes Z du champ magnétique de rotor, les composantes X étant orientées le long de la direction X, les composantes Y le long de la direction Y et les composantes Z le long d'une direction Z du rotor (400) orientée perpendiculairement à la direction X et à la direction Y, **caractérisé en ce que** le procédé (100) comprend :

le déplacement du rotor (400) vers une position de rotation (RP) du rotor (400) sur l'unité de stator (300) dans une étape de déplacement (101) ;

dans la position de rotation (RP), dans chaque orientation du rotor (400) par rapport à l'unité de stator (300), chaque unité magnétique (407) du rotor (400) recouvrant un groupe de bobines (321) de l'unité de stator (300) qui n'est pas recouvert par une autre unité magnétique (407) du rotor (400) ;

la commande des groupes de bobines (321) recouverts par l'unité magnétique (407) du rotor (400) dans la position de rotation (RP), et la génération d'un champ magnétique de stator par chaque groupe de bobines commandé (321) dans une étape de commande (103) ; et

la rotation du rotor (400) autour d'un axe de rotation orienté perpendiculairement à une surface de stator (303) de l'unité de stator (300) d'un angle de rotation prédéterminé (α) par les champs magnétiques de stator des groupes de bobines commandés (321) recouverts par les unités magnétiques (407) du rotor (400) dans une étape de rotation (105).

**2.** Procédé (100) selon la revendication 1, dans lequel l'unité de stator (300) comprend une pluralité de segments de stator (308), les segments de stator (308) étant réalisés sous forme rectangulaire et étant juxtaposés par paires dans la direction X ou dans la direction Y, chaque segment de stator (308) comprenant respectivement des groupes de bobines X (323) et des groupes de bobines Y (325) qui sont séparés des groupes de bobines X (323) et des groupes de bobines Y (325) d'autres segments de stator (308), et la position de rotation (RP) étant une position sur l'unité de stator (300) dans laquelle quatre segments de stator (308) sont adjacents les uns aux autres.

**3.** Procédé (100) selon l'une quelconque des revendications précédentes, dans lequel l'étape de commande (103) comprend :

l'alimentation en courant de chacun des groupes de bobines (321) recouverts par les unités magnétiques (407) avec une alimentation en courant individuelle lors d'une première étape d'alimentation en courant (107).

**4.** Procédé (100) selon la revendication 3, dans lequel l'étape de commande (103) comprend :

la détermination d'une force magnétique agissant par un champ magnétique de stator d'un groupe de bobines (321) sur une unité magnétique (407) recouvrant le groupe de bobines (321) dans une étape de détermination de force (109) ;

la détermination d'une alimentation en courant individuelle pour chacun des groupes de bobines (321) recouverts par les unités magnétiques (407) dans une étape de détermination d'alimentation en courant (111), de telle sorte qu'un couple du rotor (400) autour de l'axe de rotation est généré par un ensemble des forces magnétiques agissant sur les unités magnétiques (407) par les champs magnétiques de stator selon les alimentations en courant individuelles des groupes de bobines (321), qui est adapté pour provoquer la rotation du rotor selon l'angle de rotation (α).

**5.** Procédé (100) selon la revendication 4, dans lequel l'étape de détermination de force (109) comprend :

le calcul du couple nécessaire pour la rotation selon l'angle de rotation prédéterminé (α) dans une étape de calcul de couple (113) ;

le calcul des forces magnétiques nécessaires pour générer le couple et agissant sur les unités magnétiques individuelles (407) du rotor (400) dans une étape de calcul de force (115) ; et dans lequel l'étape de détermination d'alimentation en courant (111) comprend : le calcul des alimentations en courant individuelles des groupes de bobines (321) nécessaires pour générer les forces magnétiques calculées dans une étape de calcul d'alimentation en courant (117).

**6.** Procédé (100) selon la revendication 5, dans lequel les calculs du couple et des forces dans l'étape de détermination de force (109) et des alimentations en courant dans l'étape de détermination d'alimentation en courant (111) sont effectués par une unité de commande (201) du système d'entraînement planaire (200) pendant la commande du rotor (400).

**7.** Procédé (100) selon la revendication 5 ou 6, dans lequel les calculs du couple et/ou des forces dans l'étape de détermination de force (109) et/ou des alimentations en courant dans l'étape de détermination d'alimentation en courant (111) comprennent des simulations, les simulations étant basées sur une description de modèle d'une relation entre l'alimentation en courant des groupes de bobines (321) et les forces magnétiques agissant sur les unités magnétiques (407) et/ou sur une description de modèle d'une relation entre l'alimentation en courant des groupes de bobines (321) et le couple agissant sur le rotor (400).

**8.** Procédé (100) selon l'une quelconque des revendications précédentes, dans lequel l'étape de déplacement (101) comprend :

la détermination des groupes de bobines (321) de l'unité de stator (300) qui sont recouverts par les unités magnétiques (407) du rotor (400) dans une étape de détermination de bobines (119).

9. Procédé (100) selon la revendication 8, dans lequel l'étape de détermination de bobines (119) comprend :

la détection des champs magnétiques de rotor des unités magnétiques individuelles (407) du rotor (400) par des capteurs de champ magnétique (501) de l'unité de stator (300) dans une étape de détection (121) ;
la définition d'une zone de recouvrement (329) pour chaque unité magnétique (407) dans une étape de définition (123), la zone de recouvrement (329) identifiant une zone de l'unité de stator (300) qui comprend les capteurs de champ magnétique (501) détectant le champ magnétique de rotor de l'unité magnétique (407) respective ; et
la détermination des groupes de bobines (321) qui sont au moins partiellement agencés dans une zone de recouvrement (329) dans une étape de détermination (125).

10. Procédé (100) selon l'une quelconque des revendications précédentes, dans lequel l'étape de déplacement (101) comprend :
l'alimentation en courant d'une pluralité de groupes de bobines (321) avec une alimentation en courant de consigne commune dans une deuxième étape d'alimentation en courant (127).

11. Procédé (100) selon l'une quelconque des revendications 2 à 10 précédentes, dans lequel le rotor (400) comprend deux unités magnétiques X (411, 413) et deux unités magnétiques Y (415, 417), les unités magnétiques X (411, 413) étant agencées sur des côtés opposés du rotor (400) dans la direction Y et les unités magnétiques Y (415, 417) étant agencées sur des côtés opposés du rotor (400) dans la direction X, et, dans la position de rotation (RP), au moins quatre groupes de bobines (321) étant recouverts par les unités magnétiques (407), et chacun des quatre groupes de bobines (321) étant agencé dans un segment de stator (308) respectif.

12. Procédé (100) selon l'une quelconque des revendications précédentes, dans lequel l'angle de rotation (α) peut être sélectionné pour toute valeur comprise entre 0° et 360°.

EP 4 233 163 B1

**Fig. 1**

Fig. 2

EP 4 233 163 B1

**Fig. 3**

EP 4 233 163 B1

Fig. 4

EP 4 233 163 B1

**Fig. 5**

Fig. 6

Fig. 7

EP 4 233 163 B1

33

**Fig. 8**

100

| 101 |
| 103 |
| 105 |

**Fig. 9**

100

101

| 127 |

119

| 121 |
| 123 |
| 125 |

103

109

| 113 |
| 115 |

111

| 117 |

| 107 |

| 105 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020130795
- DE 102017131304 A1
- DE 102018129731 A1